(19) Europäisches Patentamt
European Patent Office
Office européen des brevets

(11) Veröffentlichungsnummer: **0 131 693 B1**

(12) # EUROPÄISCHE PATENTSCHRIFT

(45) Veröffentlichungstag der Patentschrift: **26.08.92**

(51) Int. Cl.$^5$: **A01D 43/06**, B65G 67/22

(21) Anmeldenummer: **84103764.1**

(22) Anmeldetag: **05.04.84**

Teilanmeldungen 86107152, 86107151
eingereicht am 27.05.88.

Die Akte enthält technische Angaben, die nach dem Eingang der Anmeldung eingereicht wurden und die nicht in dieser Patentschrift enthalten sind.

(54) **Erntemaschine mit einem automatisch steuerbaren beweglichen, das Erntegut ausstossenden Stutzen.**

(30) Priorität: **06.04.83 US 482691**

(43) Veröffentlichungstag der Anmeldung:
**23.01.85 Patentblatt 85/04**

(45) Bekanntmachung des Hinweises auf die Patenterteilung:
**26.08.92 Patentblatt 92/35**

(84) Benannte Vertragsstaaten:
**AT BE CH DE FR GB IT LI NL SE**

(56) Entgegenhaltungen:
**EP-A- 0 070 015**
**EP-A- 0 070 340**
**EP-A- 0 087 236**
**GB-A- 2 073 914**

(73) Patentinhaber: **DEERE & COMPANY**
**1 John Deere Road**
**Moline, Illinois 61265(US)**

(72) Erfinder: **Johnson, Stanley Jerome**
**2706 Cedar Heights Drive**
**Cedar Falls Iowa 50613(US)**
Erfinder: **Gold, Gary Lee**
**231 Hollywood Avenue**
**Waterloo Iowa 50701(US)**

(74) Vertreter: **Fricke, Joachim, Dr. et al**
**Dr. R. Döring, Dr. J. Fricke, Patentanwälte**
**Josephspitalstrasse 7**
**W-8000 München 2(DE)**

EP 0 131 693 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Futtererntemaschine mit einem das Erntegut auf einen dieses aufnehmenden Wagen gerichtet ausstoßenden Stutzen, der mittels eines Schwenkantriebes und eines diesen steuernden elektronischen Steuersytems gegenüber der Erntemaschine und dem Wagen verschwenkbar ist. Es handelt sich somit um eine Kombination aus einer Futtererntemaschine und einem Wagen. Das Steuersystem hat die Aufgabe den Schwenkantrieb des Stutzens so zu steuern, daß während der Arbeit und bei jeder möglichen relativen Stellung zwischen Erntemaschine und Wagen der Stutzen so ausgerichtet wird, daß der Wagen das von dem Stutzen ausgestoßene Erntegut möglichst ohne Verluste und bei gleichmäßiger Beladung des Wagens aufnehmen kann. Zu diesem Zweck spricht das Steuersystem auf die Signale von Fühlermitteln an die zum Abtasten der relativen Schwenkstellung des Stutzens und der relativen Ausrichtung von Erntemaschine und Wagen dienen. Das Steuersystem verwendet diese Stellungssignale, um den Schwenkantrieb auf zwei verschiedene Weisen zu steuern: Bei einer Kurvenfahrt muß der Stutzen eng auf den Wagen ausgerichtet werden, um so Ernteverluste zu vermeiden. Wenn sich dagegen Futtererntemaschine und Wagen in der Geradeausfahrt befinden, besteht für die Verschwenkbarkeit des Stutzens eine größere Freiheit, d.h. der Stutzen kann über einen begrenzten Winkelbereich gegenüber dem Wagen verschwenkt werden, was notwendig ist, um den Wagen über seine ganze Länge und seine Breite gleichmäßig mit dem Erntegut zu beladen.

Solche Steuersysteme für Futtererntemaschinen können auf verschiedene Weise ausgebildet sein. So ist in der EP-A-70 015 eine Futtererntemaschine mit einem Steuersystem zur automatischen Lagesteuerung des Stutzens vorgesehen, dessen Steuersystem in Abhängigkeit von den von den Fühlermitteln ertasteten Signalen die Ansprechempfindlichkeit des Steuersystems zwischen einer hohen Ansprechempfindlichkeit während der Kurvenfahrt und einer demgegenüber deutlich erniedrigten Ansprechempfindlichkeit während der Geradeausfahrt verändert. Damit hat der Fahrer die Möglichkeit, während der Geradeausfahrt und der niedrigeren Ansprechempfindlichkeit des Steuersystems den Stutzen mit der Hand über einen größeren vorbestimmten Winkel zu verschwenken. Sobald die Anordnung aus Futtererntemaschine und Wagen eine Kurvenfahrt beginnen wird dieser Schwenkwinkel automatisch durch Erhöhung der Ansprechempfindlichkeit des Steuersystems eingeengt. Diese Umschaltung auf unterschiedliche Ansprechempfindlichkeiten erfolgt in Abhängigkeit von den Signalen der Fühlermittel automatisch.

Bei der Ausführungsform nach der EP-A-70 340 sind für die Betätigung des Schwenkantriebes zwei getrennte elektrohydraulische Steuerventile vorgesehen, von denen das eine durch das Steuersystem automatisch und das andere durch den Fahrer mittels Hand betätigt wird. Auch hier arbeitet das elektronische Steuersystem in Abhängigkeit von Signalen von Fühlermitteln, welche die relativen Stellungen von Futtererntemaschine und Stutzen bzw. Wagen abtasten. Die Anordnung ist so getroffen, daß der Fahrer jederzeit auf manuelle Weise eine Verschwenkung des Stutzens vornehmen kann, mit der Folge, daß der automatische Steuerkreis dabei automatisch unterbrochen wird, um so zu verhindern, daß dem Schwenkantrieb Schwenkbefehle von dem automatischen Steuersystem und gleichzeitig von der manuellen Steuerung zugeleitet werden können.

In einem anderen Fall (vgl. GB-A-29 73 914) wird unter Bezugnahme auf die US-PS 40 42 132 die Notwendigkeit von zwei Fühlern zum Abtasten einerseits der relativen Schwenkstellung des Stutzens gegenüber der Erntemaschine und andererseits der relativen Ausrichtung von Erntemaschine und Wagen als Nachteil empfunden. Es wird daher eine einzige und berührungslos arbeitende Fühlereinrichtung verwendet, wobei das elektronische Steuersystem so ausgebildet ist, daß die den Schwenkantrieb steuernden Kontrollsignale dann und nur dann erzeugt werden, wenn der berührungslose Fühler, der aus einem Lichtsender und einem Lichtempfänger besteht, anspricht. Mittels Hand können Werte, die einen von der genauen Ausrichtung des Stutzens auf den Wagen abweichenden Versetzungswinkel für den Stutzen bestimmen, dem Steuersystem vorgegeben werden. Das Steuersystem berücksichtigt automatisch diese zusätzlich eingegebenen Werte bei der Steuerung des Schwenkantriebes. Zur Einstellung des Versetzungswinkels kann eine besondere Kontrolleinheit des Steuersytems mit entsprechenden Handschaltmitteln vorgsehen sein. Es kann für diesen Zweck auch ein einfaches, mittels Hand verstellbares Potentiometer dienen, mit dem an geeigneter Stelle des elektronischen Steuersystem in dieses eingegriffen werden kann.

Im Zusammenhang mit dem mittels Hand verstellbaren Potentiometer zur Veränderung des Versetzungswinkels wird in der oben erwähnten GB-PS darauf hingewiesen, daß dieser manuelle Eingriff die Möglichkeit einer genaueren Zentrierung des Erntegutausstoßes in den Wagen ermöglicht, aber auch zur besseren Verteilung des Gutes im Wagen eine Verstellmöglichkeit bietet. Die manuelle Kontrolle ermöglicht für diese Zwecke periodische Einjustierungen. Es kann statt des manuellen Eingriffes auch eine automatische Einstellung vorgesehen sein, um die Stellung des Stutzens periodisch und in spezieller Weise programmiert zu verändern. So kann es nach der britischen Patentschrift wünschenswert sein, das Fahrzeug bei Beladung von der Seite her zunächst vorne und dann im hinteren Teil zu füllen. In diesem Falle kann ein vorbestimmter Versetzungswinkel vorgegeben sein, der eine solche Arbeitsweise ermöglicht. Es kann aber auch bei einem nachlaufenden Fahrzeug zur Erzielung einer gleichmäßigeren seitlichen Verteilung des Erntegutes wünschenswert sein, den Stutzen langsam hin und her gleiten zu lassen, Nähere Angaben, wie diese Möglichkeiten in der Praxis bei dem Steuersystem nach der britischen Patentschrift verwirklicht werden könnten, enthält diese Druckschrift nicht.

Bei all den zuvor genannten bekannten Futtererntemaschinen sind die elektronischen Steuersysteme mit üblichen elektronischen Elementen, wie elektronsichen Filtern, Verstärkern, elektronischen Gattern, Multivibratoren und dgl. bestückt.

All diese bekannten Steuersysteme erfordern nach wie vor erhebliche Aufmerksamkeit seitens des Fahrers der Erntemaschine, wenn die Verluste an Erntegut in Grenzen gehalten werden sollen und eine gleichmäßige Befüllung des der Erntemaschine zugeordneten Wagens gewährleistet sein soll.

Es ist Aufgabe der Erfindung, eine solche Erntemaschine so weiterzubilden, daß der Fahrer der Erntemaschine im erheblichen Umfange entlastet wird und dennoch eine gleichförmige Beladung des Wagens unter weitgehender Vermeidung von Erntegutverlusten erreicht wird.

Diese Aufgabe wird durch die Lehre des Anspruchs 1 gelöst.

Die Lehre nach der Erfindung wendet sich von den herkömmlichen elektronischen Steuersystemen für die Zwecke der Kontrolle des Schwenkantriebes des Stutzens einer Futtererntemaschine ab und sieht stattdessen einen digitalen Computer und ein diesem zugeordnetes komplexes Computerprogramm vor. Der digitale Computer dient dabei nicht bloß zum Ersatz diskreter Komponenten eines mit üblichen elektronischen Einheiten bestückten elektronischen Steuerkreises. Er hat vielmehr im Zusammenhang mit dem zugeordneten Computerprogramm die Aufgabe alle wesentlichen Funktionen zu übernehmen und so den Fahrer der Futtererntemaschine in seiner Aufmerksamkeit für die richtige Ausrichtung des Stutzens weitgehend zu entlasten. Zu diesem Zw4eck enthält das Computerprogramm die im Anspruch angegebenen ersten und zweiten Modusmittel und das Programm selber enthält auch die Auswahlmittel, um die beiden Modusmittel in Abhängigkeit von den Signalen der Fühlermittel und in Abhängigkeit von dem Programm automatisch zur Wirkung zu bringen bzw. außer Wirkung zu setzen.

Der Fahrer kann sich somit vollständig auf die Steuerung der Futtererntemaschine konzentrieren, da der Computer in Verbindung mit dem Programm nicht nur die unterschiedlichen Bedingungen bei Kurvenfahrt und bei Geradeausfahrt erfaßt und berücksichtigt, sondern automatisch auch für eine gleichmäßige Beladung des Wagens mit dem Futtererntegut Sorge trägt.

Bei der manuellen Steuerung des Stutzens bzw. dessen Schwenkantriebes kann der Stutzen durch den Fahrer beliebig verschwenkt werden. Dabei sind in einer bevorzugten Ausführungsform die manuellen Steuermittel gemäß der Lehre des Anspruchs 2 ausgebildet und wirkungsmäßig mit dem Computerpgrogamm verknüpft. Unabhängig davon gewährleistet die Ausbildung gemäß Anspruch 1, daß der Fahrer seine Aufmerksamkeit auf die Stellung des Stutzens nur so lange zulenken braucht, so lange er dessen Schwenkantrieb manuell steuert. Er kann die manuelle Steuerung jederzeit abbrechen, ohne daß er weiterhin seine Aufmerksamkeit auf die Stutzenstellung und deren Veränderung bzw. auf die Umschaltung auf den automatischen Betrieb aufzuwenden braucht. Dies ist möglich, weil das Programm des Computers auch während der manuellen Steuerung mit in dem Programm entsprechend integrierten Überwachungsmitteln weiterläuft, so daß das Ende der manuellen Steuerung automatisch festgestellt, die Stellung des Stutzens bei Ende der manuellen Steuerung ermittelt, der Stutzen in den normalen Arbeitswinkelbereich der ersten Modusmittel zurückgeführt und dann die ersten Modusmittel zur Übernahme der Steuerung des Schwenkantriebes wieder zur Wirkung gebracht werden.

Die manuelle Übersteuerung nach Anspruch 2 betrifft nur die Einwirkung der Computersteuerung auf den Schwenkantrieb, bedeutet jedoch nicht eine Unterbrechung der Arbeit des programmierten digitalen Computers. Dieser führt vielmehr seine sonstigen Programmfunktionen, insb. Überwachungsfunktionen, ohne Unterbrechung weiterhin aus. Die Übersteuerungsmöglichkeit bietet dabei den Vorteil, daß der Fahrer z.B. bei stark mit Disteln durchwachsenen Bereichen des Feldes durch Schwenken des Stutzens verhindern kann, daß die Disteln in den das Futter aufnehmenden Wagen gelangen. Auch kann der Fahrer auf diese Weise plötzliche Windeinflüsse kompensieren, um Ernteverluste zu vermeiden.

Der Anspruch 3 und die folgenden Unteransprüche betreffen vorteilhafte Weiterbildungen der Lehre des Anspruchs 1.

Die Erfindung wird nachfolgend anhand schematischer Zeichnungen an einem Ausführungsbeispiel näher erläutert.

Es zeigen:

Figur 1

in Draufsicht eine typische landwirtschaftliche Maschineneinheit, die z.B. eine Futtererntemaschine umfaßt, an die ein das Erntegut aufnehmender Wagen angehängt ist.

Figur 2
in vereinfachter schematischer Darstellung ein Steuersystem der neuen Anordnung.

Figur 3
ein detailiertes Kreisschema der selbsttätigen Steuereinheit nach Fig. 2.

Figur 4a bis 4b
logische Fließdiagramme der Steuralgorithmen, die von dem Mikroprozessor nach Figur 3 stammen.

Figur 5
ein logisches Fließdiagramm eines Routinevorganges, der während der Arbeitsweise der Algorithmen der Figuren 4a bis 4p ausgeführt wird.

Figur 6
eine schematische Wiedergabe der Stellungen des Stutzens beim Streichmodus.

Figur 7
ein logisches Fließdiagramm einer Routineüberprüfung der Prüfgrenze und der Ausgangsbefehle, wie sie während der Arbeitsweise der Algorithmen der Figuren 4a bis 4b durchgeführt werden und

Figur 8
ein logisches Fließdiagramm einer Testroutine zur Überprüfung der manuelle Arbeitsweise, wie sie während der Arbeitsweise der Algorithmen der Figuren 4a bis 4p durchgeführt wird.

Wie aus Fig. 1 hervorgeht ist eine durch Ackerschlepper gezogene Erntemaschine 10 oder eine selbstfahrende Erntemaschine (nicht gezeigt) vorgesehen, welche eine Zugstange aufweist, die durch den drehbaren Erntegutausstoßstutzen der Sicht entzogen ist. Die Deichsel 16 eines Wagens 18 ist an die Zugstange angehängt, so daß der Wagen 18 das von dem Stutzen 14 ausgestoßene Material aufnimmt. Ein Stutzenwinkel wird definiert als relativer Winkel zwischen dem Stutzen 14 und der Längsachse der Erntemaschine 10. Ein Deichselwinkel wird definiert als der relative Winkel zwischen der Wagendeichsel 16 und der Längsachse.

Ein Steuersystem 22 ist schematisch in Fig. 2 gezeigt. Dieses dient dazu die Stellung des Stutzen 14 zu steuern, und zwar entweder automatisch oder manuell. Die Steuerung erfolgt über einen elektrohydraulischen Kreis 24. Ein solcher ist üblich bei Erntemaschinen, um den Stutzen 14 nach links oder nach rechts zu bewegen. Der Kreis 24 umfaßt einen üblichen doppelwirkenden Fluidmotor 26, der den Stutzen 14 entweder nach links oder nach rechts in Abhängigkeit von dem Strömungsmittel dreht, das von einem vorgesteuerten Richtungssteuerventil 28 geliefert wird. Dieses ist mit einer Pumpendruckleitung 30 und einer Sumpfleitung 32 verbunden. Solenoidgesteuerte Vorsteuerventile 34 und 36 für die Linksbewegung und Rechtsbewegung betätigen das Richtungssteuerventil 28 in Abhängigkeit von Steuersignalen, die über Steuerleitungen 38 bzw. 40 für Linksbewegung und Rechtsbewegung geliefert werden. Zum Betrieb mit einem nicht gezeigten hydraulischen System mit offener Mitte umfaßt der Kreis 24 ein nach Wunsch vorgesteuertes Umgehungsventil 42, das durch ein solenoidbetätigtes Ventil 44 steuerbar ist, welches seinerseits Steuersignale über eine Steuerleitung 46 empfängt. Es wird bemerkt, daß es innerhalb des Rahmens der vorliegenden Erfindung liegt, den hydraulischen Motor 26 durch einen elektrisch angetriebenen Motor zu ersetzen und den hydraulischen Kreis 24 durch einen elektrischen Steuerkreis.

Ein Schaltmodul 50 für manuelle Richtungssteuerung umfaßt einen momentan wirksamen doppelpoligen und doppelgängigen Schalter 51, bei dem eine Seite beider Pole mit dem +12 Volt-Anschluß der Fahrzeugbatterie oder einer anderen Stromversorgung verbunden sind. Schaltkontakte 52,54 für Linkssteuerung und Rechtssteuerung sind mit den zugeordneten Eingängen oder Steuerleitungen 38 bzw. 40 verbunden. Nach Wunsch können in der Mittelstellung offene Kontakte 56,58 mit der Steuerleitung 46 verbunden sein, so daß das Ventil 44 betätigt wird, um das Umgehungsventil 42 zu schließen immer dann, wenn der Schalter 51 sich mit dem Kontakt 52 oder dem Kontakt 54 berührt.

Es wird nun auf Figur 3 Bezug genommen. Ein Fühler 60 für den Stutzenwinkel und ein Fühler 62 für den Deichselwinkel bestehen vorzugsweise jeweils aus üblichen Drehpotentiometern, die so angeschlossen sind, daß sie Spannungen erzeugen, die für den Stutzenwinkel bzw. Deichselwinkel repräsentativ sind. Im Fall eines nicht gezogenen, ernteaufnehmenden Wagens wird ein Wagenstellungssignal erhalten durch Verwendung eines optischen Fühlsystems für die Wagenstellung, wie dies in der oben erwähnten GB-OS 20 73 914 beschrieben ist. Die für den Stutzenwinkel maßgebliche Spannung, die durch den Fühler 60 erzeugt ist, kann als Rückführungssignal für den automatischen Steuerkreis 64 aufgefaßt werden. Dieser Kreis 64 erzeugt Steuersignale in den Leitungen 66 und 68 und in der Ausgangsleitung 70 in Abhängigkeit von der Stellung der Deichsel und des Stutzens, und zwar für Linkssteuerung oder Rechtssteuerung. Die Ausgangsleitungen 66 bis 70 sind jeweils mit Steuerleitungen 38,40 und 46 verbunden. Die Fühler 60 und 62 sind mit den Eingängen eines üblichen Multiplexors 72 verbunden. Die Potentiometer 74,76,78 sind an die Eingangsstifte 1,5 und 2 des Multiplexors 72 angekuppelt und liefern einstellbare Kalibrierungssignale, die weiter unten näher erläutert werden. Die Potentiometer für den Stutzen und die Deichsel haben Widerstandsbereiche von Null bis zum Skalenende,welche über 340° reichen mit einem Totwinkelbereich von 20°. Der Widerstandsbereich ist so gelegen, daß die eine Hälfte der vollen Widerstandsskala mit einer Geradeausstellung des Stutzens oder der Deichsel übereinstimmt. Für Diagnostikzwecke sind zwei Punkte innerhalb des vollen Widerstandsskalenbereiches vorgesehen, und zwar einer annähernd 5° von dem Null-Widerstandspunkt und der andere annähernd 1° von dem vollen Skalenendpunkt des Widerstandes. Diese werden verwendet, um Grenzen für die elektrischen oder Arbeitsbereiche der Potentiometer zu definieren.

Das Stutzenpotentiometer 60 ist vorzugsweise über ein Getriebe mit dem Stutzen gekoppelt, so daß ein Winkelbereich der Stutzenstellung von annähernd 143° dem vollen Skalenwiderstandsbereich des Potentiometers oder dem Arbeitsbereich über 334° entspricht. Das bedeutet, daß der Arbeitsbereich für das Stutzenpotentiometer 60 einem Bereich von Stutzenstellungen von 140° entspricht. Das Deichselpotentiometer 62 ist dagegen direkt mit der Deichsel 16 gekuppelt, so daß sich hier eine 1:1-Beziehung zwischen dem Deichsel-Winkelbereich und dem Winkelbereich des Deichselpotentiometers 62 ergibt. Die Beziehung der Signale von den Potentiometern 60 und 62 zu den Werten, die diesen elektrischen Bereich korrespondieren,wird geprüft, um festzustellen, ob Potentiometerfehlerkennzeichen oder Fehlerkennzeichen für eine Überdrehung des Stutzens erzeugt werden sollen. Dies wird weiter unten in Bezug auf die Schaltschritte 294, 302 und 304 bis 336 des Mikroprozessorgrogrammes beispielshaft näher erläutert.

Nach oben bzw. nach unten ziehende Vorspannwiderstände (nicht gezeigt) sind mit den Schleifkontakten der Potentiometer 74,76 und 78 verbunden. Bezüglich der Kalibrierungspotentiometer 74 bzw. 76 für den Stutzen und die Deichsel sind die Vorspannwiderstände so gewählt, daß im Falle eines offenen Kreiszustandes in der Schleifkontaktleitung die Spannungen, die an dem Multiplexor 72 anliegen, einer Kalibrierungseinstellung auf die Mitte korrespondiert.Für das Potentiometer 78 für die Wagenbreite sind die Vorspannwiderstände so gewählt, daß die bei offenem Kreiszustand auftretende Spannung am Schleifkontakt der normalen Breite eines typischen Wagens entspricht.

Der Multiplexor 72 speist die ausgewählten Signale dem Analogeingang ANO eines Mikroprozessors 80 zu. Dieser umfaßt eine zentrale Prozessoreinheit, ein ROM-Programmgedächtnis, ein RAM-Datengedächtnis sowie Eingangs- und Ausgangsstellen. Im allgemeinen speichert der Mikroprozessor ROM Instruktionen, welche die kodierte Information umfaßt, welche die Aktivitäten der zentralen Prozessoreinheit kontrolliert. Der Mikroprozessor RAM speichert kodierte Dateninformationen, die durch die zentrale Prozessoreinheit behandelt worden sind. Die zentrale Prozessoreinheit liest jede Instruktion von dem Programmgedächtnis gemäß einer vorbestimmten Folge, um die Datenprozessaktivitäten zu steuern. Das Mikroprozessorprogramm, das weiter unten beschrieben wird, ist durch die Fließkarten nach den Figuren 4a bis 4p, 5, 7 und 8 wiedergegeben.

Die Kontrollsignale, die durch den Mikroprozessor 80 erzeugt werden, werden den Adresseingängen (nicht gezeigt) des Multiplexors 72, den Relaistreibereinheiten 82 und 84 und den LED-Treibereinheiten 85,86,87 und 88 zugeführt. Die letzteren Treibereinheiten treiben korrespondierende Anzeigelampen für Links- und Rechtssteuerung 105 und 106, für linke und rechte Stutzenstellungen sowie Anzeigelampen 107 und 108 für linke und rechte Deichselstellungen. Die Lampen sind vorzugsweise auf einer für den Fahrer beobachtbaren Tafel angeordnet. Die Relaistreiber 82 und 84 treiben Relais 90 und 92 in Abhängigkeit von Steuersignalen, die durch die Mikroprozessorausgänge P10 und P11 erzeugt werden, um die zugehörigen Vorsteuerventile 36 und 34 des Kreises 24 zu betätigen. Dioden D1 und D2 sorgen für die Energiezufuhr zu den Relais 94 und dem Vorsteuerventil 44 immer wenn die Relais 90 und 92 eingeschaltet sind. Eine Diode D3 liefert einen Weg für einen induktiven Rückführungsstrom von dem Relais 94. Obwohl nicht gezeigt, kann angenommen werden, daß die Treiber 82 und 84 ähnliche Rückführungsdioden umfassen.

Die Anoden der Dioden D1 und D2 sind jeweils mit den Relaisfühleingängen P04 und P05 des Mikroprozessors 80 über identische Spannungsbegrenzungs- und Filterkreise 96 und 98 verbunden. Der Kreis 98 ist im einzelnen gezeigt. Er umfaßt Widerstände R1, R2 und R3, eine Zener-Diode D4 (z.B. vom Typ IN 4735) und einen Kondensator C1, der wie dargestellt, geschaltet ist. Durch die Kreise 96 und 98 fühlt der Mikroprozessor 80 den Einschaltzustand der Leitungen 66 und 88 der entweder manuell aufgrund der Betätigung des Schalters 51 oder automatisch aufgrund der Signale hervorgerufen ist, die an den Mikroprozessorausgängen P10 und P11 erzeugt werden. Die Kreise 96 und 98 schützen den Mikroprozessor 80 vor zu hohen Spannungen und Streuströmen.

Verbindungskreise 100 und 102 und ein Schalter 104 können an den Mikroprozessor angeschaltet werden, so daß durch Öffnen oder Kurzschließen unterschiedlicher Verbindungskreise die Arbeitsweise des Kreises 64 für spezielle Situationen angepaßt werden kann. Zum Beispiel kann eine Streichmodus-Arbeitsweise für den Stutzen zur Wirkung gebracht oder außer Wirkung gesetzt werden durch Öffnen oder Schließen des Schalters 104.

Der Kontrollalgorithmus wird nachfolgend unter Bezugnahme auf die Fließkarten nach den Figuren 4a bis 4p, 5, 7 und 8 beschrieben.

Der Algorithmus beginnt bei Schritt 202 in Abhängigkeit von einer Hardware-Rückstellung auf eine äußere Unterbrechung oder eine Unterbrechung durch einen Zeitgeber. Bei den Schritten 204 bis 208 werden äußere Unterbrechungen oder Zeitgeberunterbrechungen ausgeschlossen und der Random-Speicher RAM wird geleert. In Stufe 210 wird ein Hardware-Zeitgeber (nicht gezeigt), der integral dem Mikroprozessor 80 zugehört, ausgelöst. Dieser Hardware-Zeitgeber erzeugt periodisch ein Kennzeichnungssignal (z.B. alle 80 Millisekunden), welches dazu verwendet wird, ein gewünschtes Zeitintervall zur Verwendung mit den später zu beschreibenden Software-Zeitgeber zu erzeugen, die weiter unten beschrieben werden.

Bei Schritt 212 wird ein zur Rückführung dienender Software-Zeitgeber und ein zur Verzögerung des Streichmodus dienender Software-Zeitgeber gestartet. Danach wird bei Schritt 240 die Stellung oder der Winkel des Stutzens vom Fühler 60 ausgelesen. Bei Schritt 216 werden linke bzw. rechte Untersteuerungsregister ausgelöst auf Werte, welche 3° repräsentieren. Diese 3° ist der angenommene Wert, um den der Stutzen die angesteuerte Stellung überläuft.

Die Hauptschleife beginnt mit einer manuell betätigten Testroutine 217. Diese, die im einzelnen in Bezugnahme auf Fig. 8 beschrieben wird stellt ein oder löst manuelle Kennzeichnungssignale in Abhängigkeit davon, ob oder ob nicht irgend ein Signal an den Relais-Fühleingängen P04 P05 anliegt, und zwar aufgrund manueller Betätigung des Schaltmoduls 50.

Nach der manuellen Textroutine schreitet der Algorithmus zu Schritt 218 fort. Dieser führt ihn zur Stufe 268, wenn ein Kennzeichensignal an dem Hardware-Zeitgeber nicht eingestellt wird. Ansonsten schreitet der Alogrithmus zu den Schritten 220 bis 226 fort. Hier werden der Verzögerungszeitgeber für die Kurvenfahrt und der Verzögerungszeitgeber für den Streichmodus schrittweise heruntergeschaltet, sofern sie nicht schon auf den Null-Wert heruntergeschaltet sind.

Der Verzögerungszeitgeber, nämlich der Zeitgeber 1 für die Kurvenfahrt wird verwendet, um den Stutzen in einer Zielstellung zu halten, die möglichst nahe auf die Mitte des Wagens gerichtet ist und um eine Betätigung des Streichmodus während der Dauer von 15 Sek. verhindert nach Beendigung einer Kurvenfahrt durch die Erntemaschine (siehe die Schritte 378,384,386 und 406). Dies stellt sicher, daß sich der Wagen ziemlich genau in Fluchtung mit der Längsachse der Erntemaschine befindet, bevor dem Stutzen erlaubt wird, über einen größeren Winkel von der Mitte des Wagens abzuweichen.

Die Zeitverzögerungseinrichtung (Zeitgeber 2) für den Streichmodus wird verwendet, um den Stutzen in jeder Streichmodus-Stellung für die Dauer von 15 Sek. (siehe die Schritte 508,516,528) zu halten und eine Betätigung des Streichmodus zu verhindern bis zur Dauer von 15 Sek. nach Vollendung einer manuellen oder automatischen Stutzenbewegung (siehe Schritt 482), durch den der Stutzen in den zentralen 25%-Bereich des das Erntegut aufnehmeneen Fensters gebracht wird.

Während der Schritte 228 bis 232 wird ein Anzeigezeitgeber (Zeitgeber 3) schrittweise heruntergeschaltet (230) oder eingeschaltet (232), wie dies durch Schritt 228 bestimmt wird, um ein Datenbit zu liefern, welches mit einer Geschwindigkeit von 1 bis 2 Hz hin und her pendelt. Dieses Datenbit wird zum Auslösen einer flackernden Anzeigevorrichtung (nicht gezeigt) verwendet. Die Schritte 243 bis 236 schalten schrittweise einen Verzögerungszeitgeber (Zeitgeber 4) für ein Relais zurück, zum Zwecke der Diagnostik für das Relais.

Der Schritt 237 bestimmt, ob ein Fehlerkennzeichen für das Stutzenpotentiometer bei Schritt 312 festgelegt worden ist. Wenn nicht, schreitet der Algorithmus zu Schritt 238. Wenn doch, wird der Algorithmus zu Schritt 237A geleitet. Dort wird ein Zeitgeber für 4 Sek. (Zeitgeber 5) oder ein Verzögerungszeitgeber für den Fehler des Stutzenpotentiometers schrittweise betätigt, der bei Schritt 312 gestartet worden ist. Danach leitet der Schritt 237B den Algorithmus zu Schritt 238, wenn der Zeitgeber 5 nicht ausgelaufen ist. Im anderen Fall schreitet der Algorithmus zu Schritt 237C fort, der ein Verzögerungskennzeichen für einen Fehler des Stutzenpotentiometers einstellt. Dieses Kennzeichen wird nicht eingestellt, solange nicht das Fehlerkennzeichen für das Stutzenpotentiometer in Schritt 312 kontinuierlich für die Dauer von 4 Sek. eingestellt bleibt.

Der Schritt 238 führt den Algorithmus zu Schritt 240, wenn ein Untersteuerungs-Verzögerungszeitgeber (Zeitgeber 6) läuft. Ansonsten wird der Algorithmus zu Schritt 246 gelenkt. Der Zeitgeber 6 hat vorzugsweise eine Dauer von annähernd einer Sekunde und wird gestartet, wenn dem Stutzen befohlen wird seine Bewegung zu beenden (siehe Schritt 508). Der Untersteuerungs-Zeitverzögerer wird verwendet, um die erneute Berechnung der rechten und linken Untersteuerungswerte UNDR bzw. UNDL in Schritt 504 zu verzögern, bis der Stutzen genügend Zeit hatte, um sich in die Haltestellung einzuschleichen nach einer automatischen Stutzenbewegung. Der Schritt 240 schaltet den Untersteuerungs-Verzögerungszeitgeber schrittweise zurück worauf in Schritt 246 der Hardware-Zeitgeber ausgelöst wird. Nach Schritt 246 wird die Testroutine für die manuelle Betätigung nach Fig. 8 bei Schritt 268 wiederholt.

Der Schritt 270 hebt die Multiplexor-Fehlerkennzeichnung auf. Danach werden die Schritte 272 bis 278 wirksam, um ein Multiplexor-Fehlerkennzeichen in Schritt 278 einzuschreiben, wenn der Eingangsstift 4 des Multiplexors 72 nicht ordnungsgemäß geerdet ist, wenn die Spannung am Eingangsstift 12 des Multiplexors und am Grenzwerteingang Vth des Mikroprozessors 80 nicht 2 Volt beträgt oder wenn die Spannung am Stift 13 des Multiplexors 72 nicht 5 Volt beträgt. Ansonsten schreitet der Algorithmus fort zu Schritt 286. Der geerdete Eingang (Stift 4) des Multiplexors 72 und der 5-Volt-Eingang (Stift 13 des Multiplexors 72) sind so gewählt, daß der Adressiercode eines gleich "alle 1" und der Adressencode des anderen gleich "alle 0" ist. Damit sind die Adressencodes, welche dem geerdeten Eingang und dem 5-Volt-Eingang entsprechen unkorrekt, wenn der Adressenmechanismus nicht ordnungsgemäß arbeitet. Auf diese Weise erhält man eine bestimmte Selbstdiagnotikfunktion. Zunächst wird die Arbeitsweise des Analog/Digitalwandlers (Teil des Mikroprozessors 80) verifiziert. Als zweites wird die Arbeitsweise des Adressiermechanismus zwischen Mikroprozessor 80 und Multiplexor 72 getestet.

Während der Schritte 286 bis 292 werden Werte von dem Kalibrierungspotentiometer 74 für den Stutzen und 76 für die Deichsel und das Potentiometer 78 für die Wagenbreite sowie der Stellungsfühler 62 für die Deichsel abgelesen. Dann leitet der Schritt 294 den Algorithmus zu Schritt 302, wo ein Fehlerwert des Deichselpotentiometers eingestellt wird. Von dort wird weitergeschaltet zu 303, wenn der Deichselpositionswert TPTONG von Schritt 292 mit einem Wert korrespondiert, der außerhalb des 334° betragenden elektrischen Bereiches des Deichselpotentiometers 62 liegt. Da die Deichsel normalerweise physikalisch daran gehindert ist, sich aus Stellungen über 90° gegenüber der Geradeausstellung hinaus zu bewegen, können sehr niedrige oder sehr große Potentiometerwerte auf der Deichselskala interpretiert werden als Werte aufgrund eines Versagens des Potentiometers. Ansonsten leitet der Schritt 294 den Algorithmus zu Schritt 296. Hier wird das Potentiometerfehlersignal für die Deichsel gelöscht. Bei 298 wird der Deichselstellungswert TPTONG von Schritt 292 (durch den Deichselkalibrierungswert modifiziert entsprechend der Feststellung TPTONG = TPTONG + (TCAL ÷ 8). Darin bedeutet TCAL der Deichselkalibrierungswert von dem Kalibrierungspotentiometer 76. Bei Schritt 300 wird der TPTONG-Wert dann, wenn dieser Wert größer als +55° oder kleiner als -55° ist, eingestellt gleich +55° bzw. -55°. Dies verhindert eine übermäßige Stutzendrehung, wenn die Deichsel frei schwingen kann oder aufgräumt ist.

Die Testroutine für die manuelle Betätigung nach Fig. 8 wird bei Schritt 303 wiederholt. Bei Schritt 304 wird der Stutzenwinkel oder Stellungswert TSPOU von dem Fühler 60 gewonnen. Bei Schritt 306 wird dann der Algorithmus zu Schritt 338 gelenkt, wenn der Unterschied zwischen dem laufenden und dem vorangegangenen Signal, das den Stutzenwinkel repräsentiert, größer ist als ein Grenzwert, der einer Stutzenwinkelgeschwindigkeit von beispielsweise 18° pro Sekunde entspricht. Da der Stutzen normalerweise langsamer als mit dieser Winkelgeschwindigkeit bewegt wird, zeigen rasche Änderungen der Werte des Stutzenpotentiometers an, daß der Stutzen außerhalb des elektrischen Arbeitsbereiches des Stutzenpotentiometers 60 herausgedreht ist. Damit dient Schritt 306 dazu festzustellen, ob der Stutzen über den elekrtischen wirksamen Bereich des Potentiometers 60 hinausgedreht worden ist, was zu einer abrupten Änderung des Signals führen würde, das durch das Potentiometer 60 erzeugt wird. In diesem Falle wird der alte Stellungswert des Stutzens verwendet, da der Algorithmus direkt von Schritt 306 zu Schritt 338 fortschreitet und damit den Schritt 334 ausläßt, wo normalerweise der Stellungswert für den Stutzen neu eingestellt würde. Ansonsten schreitet der Algorithmus zu Schritt 308 fort, der den Algorithmus zur Schritt 314 leitet, wenn ein Fehlerkennzeichen für das Stutzenpotentiometer zuvor bei Schritt 312 eingestellt worden ist. Wenn nicht, schreitet der Algorithmus von Schritt 308 nach Schritt 310 fort. Dieser leitet den Algorithmus zu Schritt 320, wenn das Signal vom Potentiometer 60 innerhalb des 334° betragenden Arbeitsbereiches liegt. Ansonsten schreitet der Algorihtmus fort zu Schritt 312. Das bedeutet, daß Schritt 312 ein Fehlerkennzeichen für das Stutzenpotentiometer setzt und den Verzögerungszeitgeber für den Potentiometerfehler startet, wenn das Signal vom Potentiometer 60 außerhalb des Bereiches von 334° liegt. Nach Schritt 312 geht der Algorithmus weiter zu Schritt 328.

Der Schritt 320 leitet den Algorithmus zu Schritt 328, wenn ein Verdrehungsfehlerkennzeichen eingestellt worden ist (Schritt 324). Ansonsten geht er zu Schritt 322, wo ein PREHEM-Wert gespeichert wird, um anzuzeigen, ob das Potentiometer 60 sich zuletzt in der hohen Hälfte des Widerstandsbereiches oder in der unteren Hälfte befand. Nach Schritt 322 wird weitergeschaltet zu Schritt 328.

Wenn Schritt 308 den Algorithmus zu Schritt 314 lenkt bestimmt dieser, ob der Wert am Stutzenpotentiometer 60 innerhalb des 334°-Arbeitsbereiches liegt. Wenn nicht, wird weitergeschaltet zu Schritt 328. Wenn dies der Fall ist bedeutet dies, daß das Potentiometer 60 in eine Stellung innerhalb des Arbeitsbereiches zurückgeführt worden ist, so daß der Algorithmus zu Schritt 316 fortgeleitet wird. Hier wird bestimmt, ob das Signal vom Potentiometer 60 der tatsächlichen Stellung des Stutzenpotentiometers entspricht, und zwar innerhalb der gleichen Hämisphäre, in der das Signal vorher war. Wenn nicht, wird angezeigt, daß der Stutzen kontinuierlich aus einer Atmosphäre des Arbeitsbereiches des Potentiometers 60 und zurück in die andere Hämisphäre gedreht worden ist, ohne durch die zentrale Stutzenstellung hindurchgegangen zu sein. Es wird dann ein entsprechendes Fehlersignal in Schritt 324 eingestellt. Wenn ja, bedeutet dies, daß das Potentiometer 60 den Arbeitsbereich in der gleichen Hämisphäre wieder betreten hat, in der sie ihn verlassen hat, und zwar durch Umkehrung der Drehrichtung. Danach wird das entsprechende Fehlerkennzeichen bei Schritt 318 gelöscht. Nach den Schritten 324 oder 318 werden in Schritt 326 das Fehlerkennzeichen für das Stutzenpotentiometer und das entsprechende Verzögerungskennzeichen für dieses Fehlersignal gelöscht.

Somit kann durch Verfolgen der Spur (ob der Stutzen sich innerhalb des Arbeitsbereiches und in welcher Hämisphäre sich das Potentiometer befindet) das Kontrollsystem bestimmen, wenn die Bedienungsperson den Stutzen 14 aus dem normalen 140°-Arbeitsbereich manuell herausbewegt hat und kann den Stutzen 14 in Richtung auf den Wagen auf die erforderliche Richtung erneut zurückführen.

Der Schritt 328 bestimmt, ob Fehlerkennzeichen bezüglich des Verdrehungsfehler- oder des Stutzenpotentiometerfehlers eingestellt worden sind. Wenn ja, bedeutet dies, daß das Potentiometer 60 sich entweder nicht innerhalb seines Arbeitsbereiches befindet, oder einmal von einer Hämisphäre in die andere gedreht worden ist, ohne durch den Zentrierungspunkt zu gehen, wobei der Algorithmus weitergeleitet wird zu Schritt 330. Dieser bestimmt, ob der Stutzen sich zuvor in der richtigen Hämisphäre befunden hat. Wenn dies der Fall ist, muß nun der Stutzen 14 um 70° rechts von der Mitte sein und der Schritt 336 setzt einen aktuellen Stutzenstellungswert TSPOU auf einen Wert, der einer Stutzenstellung am Ende des elektrischen Bereiches des Potentiometer 60 entspricht (der Stutzen 14 befindet sich 70° rechts von der Mitte). Wenn nicht, muß der Stutzen 14 nun jenseits von 70° links von der Mitte sein und der Schritt 332 setzt einen aktuellen Stutzenstellungswert TSPOL auf einen Wert fest, der einer Stutzenstellung am Ende des elektrischen Bereiches des Stutzenpotentiometers 40 entspricht (der Stutzen 14 befindet sich 70° links von der Mitte). Damit wird deutlich, daß einer der Stutzenstellungswerte, die in den Schritten 332 oder 336 eingestellt werden, benutzt werden, immer dann, wenn der Stutzen herumgedreht worden ist und ein entsprechendes Fehlerkennzeichen in Schritt 328 eingeschrieben worden ist. Wenn kein solches Fehlersignal vorliegt, was der Fall während normaler Arbeitsweise ist, dann leitet Schritt 328 den Algorithmus zu Schritt 334, wo der aktuelle Stutzenstellungswert TSPOU entsprechend der Feststellung festgesetzt wird: TSPOU = TSPOU + (SCAL ÷ 8), worin SCAL der Stutzenkalibrierungswert für das Potentiometer 74 ist.

Wenn Schritt 306 feststellt, daß das Potentiometer 60 sich schneller ändert als mit einer bestimmten Geschwindigkeit aufgrund der Drehung des Stutzens außerhalb des elektrischen Bereiches des Potentiometers 60 oder aufgrund eines elektrischen Fehlers dieses Potentiometers, dann wird der Algorithmus direkt zu Schritt 338 gelenkt, wobei der Stellungswert für den Stutzen nicht auf den laufenden Stand gebracht oder eingestellt wird durch die Schritte 332,334 oder 336 und der Rest des Algorithmus mit dem vorangegangenen Stellungswert weiterarbeitet.

Es sollte bemerkt werden, daß während der normalen Arbeitsweise (wenn der Stutzen weder zu schnell bewegt noch herumgedereht wird oder außerhalb des 140°-Arbeitsbereiches bleibt) der Algorithmus über die Schritte 306, 308, 310, 320, 322 und 328 zu Schritt 334 schrittweise geschaltet wird, wo der gefühlte Stellungswert für den Stutzen TSPOU neu berechnet wird.

Nach den Schritten 332, 334 und 336 oder von Schritt 306 aus geht der Algorithmus weiter zu Schritt 338, der bestimmt, ob der Relaisverzögerungszeitgeber (der mit Bezug auf die vorangegangenen Schritte 234 und 236 beschrieben wird) läuft. Wenn ja, bedeutet dies, daß keine ausreichende Zeit verstrichen ist, damit die Signale zu den Relaisfühleingängen P04 und P05 des Mikroprozessors 30 zurückkehren konnten, wobei der Algorithmus weiterspringt zu Schritt 344. Wenn nicht, bedeutet dies, daß die den Relaisstatus widergebenden Signale durch die Mikroprozessoreingänge P04 und P05 aufgenommen worden sind, worauf der Algorithmus zu Schritt 340 gelenkt wird.

Die Schritte 340 bis 346 prüfen die Aktivierung der Relais 90 und 92 durch Vergleichen der Signale an den Befehlsausgängen P10 und P11 an dem Mikroprozessorausgang mit den Signalen an den Fühleingängen für die Mikroprozessorrelais P04 und P05 sowie durch Erzeugen oder Löschen eines Relaisfehlerkennzeichens entsprechend der folgenden Regeln.

Ein Relaisfehlerkennzeichen wird bei Schritt 346 nur dann eingeschrieben, wenn einer der Eingänge P10 oder P11 einen niedrigen Wert einnimmt und der korrespondierende Eingang P04 oder P05 ebenfalls niedrig ist. Ansonsten wird das Fehlerkennzeichen für das Relais in Schritt 344 gelöscht. Dies liefert ein Anzeichen dafür, daß ein Relaisaktivierungssignal erzeugt worden ist, d.h. aufgrund irgendwelcher Fehler das korrespondierende Relais nicht eingeschaltet worden ist. Zur gleichen Zeit wird ein Relaisfühlsignal, das durch eine manuelle Bewegung des Stutzens verursacht wird, nicht als Fehler interpretiert.

Die Testroutine für die manuelle Betätigung nach Fig. 8 wird bei Schritt 347 wiederholt.

Als nächstes bestimmt der Schritt 348, ob ein Fehlerkennzeichen für den Multiplexor in Schritt 278 eingeschrieben worden ist oder ein Fehlerkennzeichen für das Relais in Schritt 346. Wenn ja, schreitet der Algorithmus fort zu den SChritten 362 bis 366. Diese dienen über aufeinanderfolgenden Routinezyklen dazu, Anzeigelampen 105 bis 108 für Stutzen und Deichsel flackernd einzuschalten. Die Lichter 105 und 108 werden eingeschaltet in Abhängigkeit von der Veränderung eines Bits, das durch den Zeitgeber 3 (siehe die Schritte 228 bis 232) kontrolliert wird. Nach den Schritten 364 oder 366 geht der Algorithmus zu Schritt 374. Wenn keine Fehlerkennzeichen für das Relais oder den Multiplexor eingestellt worden sind leitet Schritt 348 den Algorithmus zu Schritt 350.

Der Schritt 350 bestimmt, ob ein Fehlerkennzeichen für das Stutzenpotentiometer durch Schritt 312 eingestellt worden ist. Wenn ja, werden die linken und rechten Stutzenlampen 105,106 durch Schritt 354 eingeschaltet, um diesen Zustand der Bedienungsperson anzuzeigen. Wenn nicht, schaltet der Schritt 352 eines der Lichter für linke oder rechte Stutzenstellung an, wenn sich der Stutzen 14 links oder rechts von der zentrierten Stellung befindet. Schritt 352 schaltet beide Lampen aus, wenn der Stutzen sich in der zentrierten Stellung befindet.

Der Schritt 356 bestimmt, ob ein Fehlerkennzeichen für das Deichselpotentiometer in dem vorangegangenen Schritt 302 eingeschrieben worden ist. Wenn ja, werden beide Deichsellichter 107,108 durch Schritt 360 eingeschaltet, um diesen Zustand der Bedienungsperson anzuzeigen. Wenn nicht, schaltet der Schritt 358 entweder das linke oder das rechte Deichselanzeigelicht an, wenn sich die Deichsel 16 in der linken oder rechten Stellung abweichend von der Mittelstellung befindet. Der Schritt 358 schaltet beide Deichsellichter aus, wenn die Deichsel zentriert ist.

Bei Schritt 374 wird ein Arbeitswert gleich dem absoluten Wert des Winkels der Deichsel 16 gegenüber der zentrierten Stellung eingestellt. In Schritt 376 wird dieser Arbeitswert mit einem großen Grenzwert für den Deichselwinkel (WIDE von z.B. 12°) verglichen. Wenn der Arbeitswert größer als dieser weite Wert ist bedeutet dies, daß sich die Erntemaschine und der Wagen bei der Durchfahrt einer Kurve befinden und der Algorithmus wird zu Schritt 384 gelenkt, welcher den Verzögerungszeitgeber für die Kurvenfahrt (Zeitgeber 1) einschaltet. Dieser Zeitgeber wird verwendet, um eine vorbestimmte Zeitperiode zu messen und wird wiederholt gestartet durch Schritt 384, solange das Fahrzeug sich in der Kurvenfahrt befindet, so daß der Zeitgeber nicht verlöscht bis eine vorbestimmte Zeit nach dem Zeitpunkt, an dem das Fahrzeug aus der Kurve herausgekommen ist. Wenn der Arbeitswert nicht größer ist als der weite Wert bedeutet dies, daß die Fahrzeug sich nicht in der Kurvenfahrt befinden und der Algorithmus schreitet fort zu Schritt 378. Wenn der Verzögerungszeitgeber noch läuft leitet Schritt 78 weiter zu Schritt 386, der ein Hysteresis-Fehlerkennzeichen einstellt. Dies erfolgt in Schritt 386, so daß Schritt 406 dazu führt, daß weitergesprungen wird zu Schritt 414. Hierbei wird der Stutzen in einer stärker auf die Deichsel ausgerichteten Stellung gehalten, und zwar bis zu einer vorbestimmten Zeit nachdem die Fahrzeuge aus der Kurve herausgekommen sind.

Wenn der Kurven-Verzögerungszeitgeber nicht läuft leitet Schritt 378 den Algorithmus zu Schritt 380. Dieser bestimmt, ob der Arbeitswert größer ist als ein kleiner Grenzwert für den Deichselwinkel (NARROW) z.B. von 9°. Wenn ja, bedeutet dies, daß die Fahrzeuge sich noch in der Kurve befinden, so daß der Algorithmus weiterspringt zu Schritt 387. Wenn nicht, bedeutet dies, daß die Fahrzeuge aus einer Kurve herausgekommen sind, so daß das Hysteresis-Fehlerkennzeichen gelöscht wird und ein Kennzeichen PWRUP bei Schritt 382 eingestellt wird, das später in dem weiter unten zu beschreibenden Schritt 496 benötigt wird.

In Schritt 387 wird die Testroutine für die manuelle Arbeitsweise gemäß Fig. 8 wiederholt.

In Schritt 288 wird ein gewünschter Stellungswert für den Stutzen SPOUTN als Funktion der gefühlten Deichselstellung durch die Gleichung ausgerechnet $SPOUTN = M1 \cdot TPTONG + B1$. In dieser beträgt M1 gleich 0,805, TPTONG den Deichselstellungswert (von Fühler 62) und B1 gleich 0. Dieser SPOUTN-Wert wird in Schritt 388 kontinuierlich auf den neuesten Stand gebracht und in einem ersten Register (nicht gezeigt) für den gewünschten Stutzenstellungswert gespeichert. Diese "M" und "B"-Werte und diejenigen die noch folgen sind nur beispielsweise und können bei verschiedenen Fahrzeugen variieren.

In Schritt 390 wird die Testroutine der Figur 8 für die manuelle Betätigung wiederholt.

Danach wird in Schritt 400 der WORK-Wert erneut eingestellt und zwar gleich der Größe des Abstandes zwischen der tatsächlichen Deichselstellung TPTONG und der mittleren Deichselstellung.

Danach wird in Schritt 402 ein Grenzwert DLIMIT für die Stutzenstellung ausgerechnet, und zwar

aus der Gleichung: DLIMIT = (M2 • WORK) + B2, in der M2 gleich 0,0 und B2 gleich 4.0 ist. Der DLIMIT-Wert wird von dem gewünschten Stutzenstellungswert abgezogen bzw. zu diesem addiert, und zwar in Schritt 418 und 420, um die oberen und unteren Grenzwerte eines schmalen Zielbereiches der zugelassenen Stutzenstellungen um die gewünschte Stellung herum zu liefern. Danach wird in Schritt 404 ein verminderter manueller Bereichswert DFMO (zur Verwendung, wenn sich der Stutzen unter manueller Kontrolle befindet) ausgerechnet, und zwar aus der Gleichung: DFMO = (M4 • WORK) + B4, worin M4 gleich 0,083 und B4 gleich 19 sind.

Im Schritt 406 wird bestimmt, ob das Hysterese-Kennzeichen eingestellt worden ist, und zwar in Schritt 386, um anzuzeigen, daß sich die Fahrzeuge in einer Kurvenfahrt befinden. Wenn dies der Fall ist, wird der Algorithmus zu Schritt 414 geleitet, Wenn nicht, schreitet der Algorithmus fort zu Schritt 408, in dem ein maximaler Weitenbereichswert ALIMIT ausgerechnet wird, und zwar durch die Gleichung: ALIMIT = M3 • WORK + B3, in der M3 gleich 0,083 und B3 gleich 22 Faktoren sind, die sich auf die Geometrie des Maschinensystems beziehen.

Als nächstes wird in Schritt 410 der maximale Weitenbereichswert ALIMIT in eine Funktion der Größe des Wageneintrittsfensters verändert, wie dieser Wert repräsentiert wird durch die Einstellung des Wagenweitenpotentiometers 78 und zwar nach der Gleichung: ALIMIT = (TPWDT • ALIMIT) - 256, worin TPWDT ein Wert ist, der die Wagenweite repräsentiert, die durch das Weitenpotentiometer 78 vorgegeben ist. TPWDT hat einen Bereich von 0 bis 255, so daß der Wert ALIMIT auf einen Wert zwischen 0 und 1 festgelegt wird. Das bedeutet, daß alle Werte, die von dem ALIMIT-Wert in Schritt 410 abgeleitet worden sind, durch Einstellung des Wagenweitenpotentiometers 78 modifiert oder verändert werden können.

In Schritt 412 wird der Wert DLIMIT gleich dem größeren des Stutzenstellungsgrenzwertes DLIMIT und des maximalen Weitenbereichswertes ALIMIT eingestellt.

Danach veranlassen die Schritte 414 und 416 den Wert DLIMIT abzunehmen, und zwar durch den DFMO-Wert, wenn der Stutzen sich unter manueller Kontrolle befindet. Ansonsten schreitet der Algorithmus von Schritt 414 zu Schritt 418. Dieser DLIMIT-Wert von den Schritten 402, 412 oder 416 wird zugeführt oder abgezogen von dem gewünschten oder dem nominellen Stutzenstellungswert SPOUTN, um hohe und niedrige Endstellungswerte für den Stutzenstellungsbereich LIMHI und LIMLO in den Schritten 418 bzw. 420 zu erhalten. Diese Grenzwerte LIMHI und LIMLO geben die Kanten eines Stutzenstellungsbereiches wieder, die durch den das Erntegut aufnehmenden Wagen bestimmt sind. Somit stellen die Schritte 388 bis 420 einen Zielbereich für die Stutzenstellungen her, der um eine nominale oder gewünschte Stellung herum zentriert ist. Die Weite dieses Zielbereiches hängt von der Wagenbreite ab sowie davon, ob der Stutzen sich unter automatischer oder manueller Kontrolle befindet und ferner davon, ob das Fahrzeug eine Kurvenfahrt ausführt oder kürzlich eine Kurvenfahrt beendet hat.

Wenn somit die Erntemaschine sich nicht in einer Kurvenfahrt befindet, wird keine Korrektur der automatischen Stutzenstellung vorgenommen, bis die Stutzenstellung von der Deichsel bei wenigstens +22° abweicht. Dieser +22°-Bereich wird repräsentiert durch die Werte LIMHI und LIMLO-Werte in den Schritten 418 und 420. Hierbei wird der Weitenbereich ALIMIT-Wert, der in den Schritten 408 und 410 eingestellt worden ist, durch Schritt 416 unmodifiziert verwendet. Dieser +22°-Wert ergibt sich aus dem B3 gleich 22-Wert in Schritt 408. Der Stutzen wird dann erneut in eine gewünschte Stellung zurückgeführt, die durch den TARGET-Wert in den Schritten 428 oder 430 repräsentiert ist, und zwar aufgrund der Arbeitsweise der Schritte 490 bis 514.

Wenn die Erntemaschine sich dagegen in einer Kurvenfahrt befindet, wird eine Stutzenstellungskorrektur durchgeführt, wenn die Stutzenstellung von der Deichsel nur um etwa 4° abweicht. Dieser engere 4°-Bereich wird repräsentiert durch die Werte LIMHI und LIMLO in Schritten 418 und 420, wobei der DLIMIT-Wert von Schritt 402 verwendet wird, und zwar ohne Modifikation in den Schritten 408 bis 412. Der 4°-Wert ergibt sich aus der Tatsache, daß B2 gleich 4 in Schritt 402 eingestellt ist. Dies beruht darauf, weil der Schritt 406 die Schritte 408 bis 412 umgehen läßt, wenn die Erntemaschine sich in einer Kurvenfahrt befindet. In ähnlicher Weise wird keine Korrektur der automatischen Stutzenstellung durchgeführt, nachdem der Stutzen manuell bewegt worden ist, sofern nicht die Stutzenstellung von der Deichsel um 19° abweicht. Dies ist aufgrund der LIMHI und LIMLO-Werte in Schritt 418 und 420, die gewonnen werden unter Verwendung des Modifizierten ALIMIT-Wertes des Schrittes 416, möglich, wenn sich der Stutzen unter manueller Kontrolle befindet. Der 19°-Wert ergibt sich aus der Tatsache, daß B4 gleich 19 ist in Schritt 404. Weiterhin wird wegen der Schritte 440 bis 482 der Stutzen nur zurückgestellt bis er sich gerade innerhalb dieses 19°-Bereiches befindet, statt in der genau ausgefluchteten Deichselzielstellung TARGET. Dies gestattet es der Bedienungsperson den Stutzen nach der einen oder anderen Seite zu verstellen, ohne daß der Stutzen automatisch zurück in die genau ausgefluchtete Stellung geführt wird, die durch den TARGET-Wert repräsentiert wird. Dies ist nützlich z.B. während windiger Verhältnisse oder bei Arbeiten in seitlichen Hangstellungen.

Der Schritt 422 bestimmt dann, ob das Streichmoduskennzeichen eingestellt wird, um anzuzeigen, daß der Stutzenstellungs-Streichmodus aktiv ist (bei der der Stutzen automatisch und in vorbestimmter Folge durch eine Reihe von Stellungen bewegt wird). Wenn dies nicht der Fall ist schreitet der Algorithmus fort zu Schritt 424. Wenn dagegen dieser Fall vorliegt, schaltet der Algorithmus zu einer Routine, die durch Schritt 423 repräsentiert und im einzelnen in Figur 5 gezeigt ist. Hier wird der gewünschte Stutzenstellungswert SPUT 9 erneut bestimmt, und zwar entsprechend der nächsten Streichmodusstellung.

Es wird nun auf Figur 5 bezug genommen. Zuerst wird der Inhalt N eines Modul 5 - Software-Streichmodus-Schrittzählers in Schritt 540 überprüft, der in Schritt 504 von dem Hauptalgorithmus abgeleitet ist. In Abhängigkeit von dem Zählerwert N wird dann der nächste gewünschte Stutzenstellungswert SPOUT in einem der korrespondierenden Schritte 550 bis 554 hergestellt. Wenn N gleich O ist, schreitet beispielsweise der Algorithmus zu Schritt 424 fort unter Verwendung des zuvor hergestellten SPOUTN-Wertes. Wenn N gleich 1,2,3 oder 4 ist, dann werden die Differentialwerte d1 oder d2 zugefügt oder abgezogen, um die neue gewünschte Größe für den SPOUTN-Wert zu erhalten. Die Differentialwerte d1 und d2 werden definiert wie folgt:

$$d1 = (DLIMIT - DFMO) \cdot 3/4 \text{ und}$$
$$d2 = (DLIMIT - DFMO) \cdot 3/8.$$

Auf diese Weise wird in dem Streichmodus der SPOUTN-Wert einen von fünf verschiedenen Werten annehmen, von denen einer eine Stutzenstellung wiedergibt, die im wesentlichen in Bezug auf die Wagendeichsel zentriert ist. Die anderen repräsentieren zwei im Abstand liegende Stellungen, die auf beiden Seiten der zentrierten Stellung angeordnet sind. Die d1 und d2-Werte werden gewählt so, daß die Streichmodusstellungen für den Stutzen typischerweise einen Abstand von annähernd 7 und 15° auf beiden Seiten der zentrierten Stutzenstellung aufweisen. Es sollte bemerkt sein, daß diese beispielsweisen Werte in Abhängigkeit von der Einstellung des Wagenweitenpotentiometers 78 aufgrund der Arbeitsweise in den Schritten 410 und 412 veränderlich sind. Es wird weiter bemerkt, daß der Zählerwert N des Streichmodus schrittweise verändert wird, wobei die Stutzenstellungen von der linken auf die rechte Seite der zentrierten Stellung abwechseln, wie dies in Fig. 6 dargestellt ist.

Es wird nun Bezug genommen auf Fig. 41. Dieser Schritt 424 bestimmt, ob der Stutzen automatisch durch den Mikroprozessor 80 bewegt wird. Wenn ja, schreitet der Algorithmus fort zu Schritt 425. Dieser richtet den Algorithmus zu Schritt 430, wenn der Stutzen sich nach links bewegt, sonst zu Schritt 428. Wenn die Antwort in 424 nein bedeutet, dann wird der Algorithmus zu Schritt 426 geleitet.

In Schritt 426 wird ein Strom gefühlt oder ein die tatsächliche Stutzenstellung wiedergebender Wert TSPOU, der von dem Stellungspotentiometer 60 abgeleitet worden ist. Dieser Wert wird mit dem gewünschten Stellungswert SPOUTN verglichen. Wenn der erste Wert größer ist als der zweite Wert, dann leitet der Schritt 426 den Algorithmus zu Schritt 430, ansonsten zu Schritt 428. In Abhängigkeit davon, ob der Stutzen 14 seine gewünschte Stellung von rechts oder von links annähert, wird ein TARGET-Wert in Schritt 428 oder 430 ausgerechnet, in denen rechte oder linke Untersteuerungswerte UNDR und UNDL ( = 1/4 der in Schritt 504 bestimmten Werte) vor dem SPOUTN-Wert abgezogen bzw. dazugezählt. Auf diese Weise wird der SPOUTN-Wert durch einen Untersteuerungsfaktor modifiziert, der so gewählt wird, daß dann, wenn die die Stutzen bewegenden Relais 90 oder 92 abgeschaltet werden, wenn der Stutzen 14 die durch den TARGET-Wert errechneten oder wiedergegebenen Stellungen erreicht, die Trägheit des Stutzen 14 diesen über die gewünschte Stutzenstellung, die durch den Wert SPOUTN repräsentiert wird, hinausgetragen wird.

Der Schritt 432 bestimmt, ob irgend ein Kennzeichen für einen "fatalen" Fehler in den Schritten 302, 237C oder 278 eingestellt worden ist. Wenn ja, schreitet der Algorithmus fort zu Schritt 438. Sonst wird er zu Schritt 440 geleitet. Der Schritt 438 schaltet die Relais 90 bis 94 ab und führt den Algorithmus zu dem Hauptstartpunkt bei Schritt 217 zurück.

An diesem Punkt ist es geeignet die Arbeitsweise des Systems zusammenzufassen, und zwar in Bezug auf Fehler des Stutzenpotentiometers bzw. einer Überdrehung des Stutzens. Wenn der Stutzen sich aus dem elektrischen Bereich des Stutzenpotentiometers 60 hinausbewegt, werden beide Stutzenlampen angezündet, und zwar in Schritt 354 und aufgrund der Arbeitsweise in den Schritten 310,312 und 350. Wenn ein in Schritt 312 eingestelltes Fehlerkennzeichen für das Stutzenpotentiometer nicht gelöscht worden ist. Bevor der in Schritt 312 gestartete Verzögerungszeitgeber für Fehler im Stutzenpotentiometer abgelaufen ist, werden alle Relais aufgrund der Arbeitsweise der Schritte 237C, 432 und 438 abgeschaltet. Unter der normalen, durch Handbetätigung ausgelösten Überdrehungssituation ist jedoch das Fehlerkennzeichen für das Stutzenpotentiometer in Schritt 326 gelöscht, bevor der Verzögerungszeitgeber ablaufen kann, so daß der Schritt 432 verhindert, daß in Schritt 438 die Relais abgeschaltet werden. Die Anzeige wird unmittelbar durch das Fehlerkennzeichen für das Stutzenpotentiometer kontrolliert. Jedoch sind die Relais auch in den Schritten 432 und 438 in Abhängigkeit von dem verzögerten Kennzeichen für das Stutzenpotentiometerfehler kontrolliert.

Schritt 440 bestimmt, ob manuell ein Kennzeichen durch irgend eine manuelle Testroutine in Abhängigkeit von einer manuellen Betätigung des Schalters 51 eingestellt worden ist. Wenn nicht, schaltet der Algorithmus fort zu den Schritten 490 bis 514. Diese definieren eine automatische Arbeitsstrategie. Andernfalls wird der Algorithmus zu Schritt 442 bis 486 geleitet. Diese bestimmen eine manuelle Arbeitsstrategie.

In dem manuellen Bereich des Strategiealgorithmus bestimmt der Schritt 442, ob der Stutzen in Abhängigkeit von einer manuellen Betätigung des Schalters 51 bewegt wird, oder ob der Stutzen in Abhängigkeit von Steuersignalen bewegt wird, die an den Ausgängen P10 und P11 des Mikroprozessors 80 erzeugt werden. Wenn die Mikroprozessorausgänge P10 und P11 nicht Anlaß für die Stutzenbewegung sind, dann wird der Algorithmus zu Schritt 444 (Fig. 4n) geleitet. Dieser bestimmt, ob ein "AUTO2"-Kennzeichen eingestellt worden ist, z.B. durch Schritt 460 unmittelbar nach Beendigung einer manuellen Einschaltung des Schalters 51. Wenn das "AUTO2"-Kennzeichen nicht eingestellt worden ist schreitet der Algorithmus fort zu Schritt 446. Dieser bestimmt, ob der Schalter 51 noch in Eingriff ist (wie dies durch das Vorliegen eines Relais-Fühlsignals an dem Relais-Fühleingang P04 oder P05 wiedergegeben wird). Wenn ja, leitet der Schritt 446 den Algorithmus zurück zu dem Hauptschleifenstartpunkt 217, so daß die manuelle Bewegung des Stutzens über Schalter 51 fortgesetzt werden kann. Wenn nicht, bedeutet dies, daß die Bedienungsperson die Betätigung des Schalters 51 beendet hat und der Schritt 446 leitet den Algorithmus zu einer "Prüfgrenze", die durch Schritt 448 repräsentiert wird. Diese wird weiter unten mit Bezug auf Figur 7 beschrieben. Kurz gesagt erzeugt diese Routine ein "Stop"-Kommando, wenn der Stutzen sich innerhalb eines Stellungsbereiches befindet, in dem der Wagen das Erntegut aufnimmt. Die Routine 448 erzeugt auch ein "Linksbewegen" oder "Rechtsbewegen"-Kommando, in Abhängigkeit davon, in welche Richtung der Stutzen bewegt werden muß, um in diesen Aufnahmebereich zurückzukehren. Wenn der Stutzen sich außerhalb dieses Aufnahmebereiches befindet, lautet das Kommando "Linksbewegen" oder "Rechtsbewegen". Schritt 450 leitet dann den Algorithmus zu Schritt 452 der ein "MANTOU"-Kennzeichen löscht und das Kennzeichen "AUTO2" einstellt. Wenn das durch die Routine 458 erzeugte Signal heißt "Stop", bedeutet dies, daß der Stutzen manuell bewegt worden ist, jedoch sich nicht außerhalb des Erntegutaufnahmebereiches befindet. In diesem Fall wird der Algorithmus durch Schritt 450 zu Schritt 460 geleitet. Dieser Schritt stellt das "AUTO2"-Kennzeichen ein und startet den Untersteuerungsverzögerungszeitgeber und den Verzögerungszeitgeber für den Steichmodus.

Nach Schritt 452 bestimmt der Schritt 454, ob der Stutzen sich außerhalb des Erntegutaufnahmebereiches befindet, und zwar um mehr als einen bestimmten Abstand. Dieser bestimmte Abstand wird vorzugsweise definiert als ein Abstand, der durch die Summe der Abstände repräsentiert wird, welche ihrerseits durch die Werte LIMHI oder LIMLO und den Untersteuerungswerten UNDR oder UNDL bestimmt sind. Wenn die Stutzenstellung sich außerhalb des Aufnahmebereiches über mehr als diesen vorbestimmten Abstand befindet, dann wird dies als eine Situation für "lange Bewegung" definiert und Schritt 454 leitet den Algorithmus zu Schritt 456. Hier wird diese Situation dadurch angezeigt, daß das "MANTOU"-Kennzeichen eingestellt wird. Ansonsten wird der Algorithmus direkt zu Schritt 548 geleitet. Dieser startet den Relaisverzögerungszeitgeber, worauf der Algorithmus zu Schritt 217 zurückkehrt. Der Relaisverzögerungszeitgeber wird gestartet, so daß Schritt 338 verhindert, daß die Relais durch Schritt 340 während der weiteren Ausübung des Algorithmus geprüft wird, und während der Stutzen sich zu bewegen beginnt.

Zurück zu Schritt 444: Wenn das Kennzeichen "AUTO2" nicht eingestellt worden ist (was im Schritt 460 nach Beendigung einer manuellen Betätigung des Schalters 51 erfolgt) wird der Algorithmus zu Schritt 462 gelenkt. Dieser bestimmt, ob das MANTOU-Kennzeichen eingestellt worden ist (welches eine Situation der "langen Bewegung" kennzeichnet). Wenn ja, geht der Algorithmus zu Schritt 464 über, wo die Grenzwerte LIMHI und LIMLO durch ihre korrespondierende Untersteuerungswerte justiert werden. Ansonsten geht der Algorihtmus direkt zu Schritt 466. Dieser vollführt erneut die Routine, auf die bei der Beschreibung des Schrittes 448 hingewiesen worden ist und in Bezug auf Fig. 7 weiter unten detailliert beschrieben wird. Nachdem die geeigneten Kommandos für die Stutzenbewegung in Schritt 466 erzeugt worden sind, bestimmt der Schritt 468 ob der Stutzen bewegt wird. Wenn ja, kehrt der Algorithmus zu Schritt 217 zurück, während sich die Stutzenbewegung fortsetzt. Sobald der Stutzen zum Stillstand gekommen ist und zwar nach Beendigung einer manuellen Betätigung des Schalters 51, leitet der Algorithmus zu Schritt 470 über, der bestimmt, ob der Untersteuerungszeitverzögerungszeitgeber (der in Schritt 460 gestartet worden ist) ausgelaufen ist.

Wenn nicht, kehrt der Algorithmus zu Schritt 217 zurück. In dieser Weise verhindert der Zeitgeber für die Untersteuerungszeitverzögerung eine Neubestimmung der Untersteuerungswerte, bis eine Sekunde nach Beendigung einer automatischen Stutzenbewegung und verzögert eine neue Überprüfung der Stutzenstellung durch die automatisch arbeitende Strategie, bis der Stutzen Zeit hat, nach einer manuellen Bewegung zum Stillstand zu kommen. Dies ermöglicht es dem Stutzen, daß er automatisch in den das Erntegut aufnehmenden Bereich des Fensters zurückgebracht wird, wenn der manuelle Schalter freigegeben ist und wenn der Stutzen sich gerade innerhalb dieses Fensters befindet, das Trägheitsmoment aber den Stutzen aus dem Fensterbereich herausbewegt. Wenn ja, schreitet der Algorithmus zu Schritt 472 fort. Dieser löscht die Kennzeichen "MANUAL, MANTOU und AUTO2", um anzuzeigen, daß eine manuelle Stutzenbewegung beendet ist und daß eine Situation für "lange Bewegung" fehlt. Nach Schritt 472 kehrt der Algorithmus zu Schritt 217 zurück.

Es wird erneut zurückgekehrt zu Schritt 442 (Fig. 4m). Wenn der Mikroprozessor den Stutzen bewegt (z.B. wenn der Stutzen automatisch in den das Erntegut aufnehmenden Bereich nach einer manuellen Bewegung des Stutzens außerhalb des Bereiches zurückbewegt wird) leitet der Schritt 442 den Algorithmus zu Schritt 474. Dieser bestimmt, ob ein Kennzeichen "MANTOU" gesetzt worden ist. Wenn ja, bedeutet dies, daß eine Langbewegungssituation existiert und der Algorithmus geht zu Schritt 476 über, wo die LIMHI und LIMLO-Werte erneut durch die Untersteuerungswerte eingestellt werden. Ansonsten leitet der Schritt 474 den Algorithmus direkt zu Schritt 478. Dieser ist identisch mit der Routine, die in Fig.7 illustriert ist, mit Ausnahme, daß der Schritt 710 (Ausgangskommandos) dieser Routine von der in Schritt 478 durchgeführten Routine eliminiert ist. Danach führt der Schritt 480 die gleiche Bestimmung aus, wie sie oben in Bezug auf Schritt 450 bestimmt worden ist, so daß dann, wenn Befehle wie "Rechtsbewegen" oder "Linksbewegen" von Schritt 478 anfallen, der Algorithmus zu Schritt 217 zurückkehrt. Ansonsten schreitet der Algorithmus zu Schritt 482 fort. Hier wird ein Kommando zum Beenden der Bewegung erzeugt. Der Relaiszeitverzögerungszeitgeber wird gestartet, um eine fehlerhafte Bestimmung der manuellen Betätigung in Schritt 802 zu verhindern. Der Untersteuerungszeitverzögerungszeitgeber wird gestartet, um die Auslösung einer automatischen Stutzenbewegung zu verhindern, bis der Stutzen seine Schleichbewegung beendet hat. Der Verzögerungszeitgeber für den Streichmodus wird gestartet (um eine Arbeitsweise unter dem Streichmodus zu verhindern, bis eine vorbestimmte Zeit seit Beendigung einer manuellen Stutzenbewegung verstrichen ist). Nach Schritt 482 kehrt der Algorithmus zu Schritt 217 zurück.

Dieser manuelle Kontrollbereich des Algorithmus stellt sicher, daß der Stutzen in dem Stellungsbereich für die Erntegutaufnahme durch den Wagen verbleibt oder in diesen zurückkehrt, nach Beendigung einer über den Schalter 51 ausgelösten manuellen Stutzenbewegung.

Es wird nun zu Schritt 440 nach Fig. 41 zurückgegangen. Wenn das manuelle Kennzeichen nicht eingestellt worden war, wird der Algorithmus zu dem strategischen Abschnitt der automatischen Betätigung des Algorithmus entsprechend der Schritte 490 bis 514 (Fig. 4o und 4p) geleitet. Der Schritt 490 führt den Algorithmus zu Schritt 492, wenn das AUTO-Kennzeichen eingestellt worden ist. Der Schritt 492 bestimmt, ob das "AUTO2"-Kennzeichen eingestellt worden ist (z.B. in Schritt 508). Wenn ja, schreitet der Algorithmus zu Schritt 494, ansonsten zu Schritt 506. Der Schritt 494 bestimmt, ob der Zeitgeber für die Untersteuerung läuft. Wenn ja, wird der Algorithmus zu Schritt 496 geleitet. Dieser bestimmt, ob das PWRUP-Kennzeichen gelöscht ist. Da dieses Kennzeichen ursprünglich beim Starten gelöscht worden und in Schritt 382 nicht eingestellt worden ist, bis der Kurvenfahrtverzögerungszeitgeber abgelaufen ist, verhindert Schritt 496 eine automatische Stutzenbewegung nach dem Startbeginn, bis der Zeitgeber für die Untersteuerungsverzögerung ausgelaufen ist (Schritt 494) und die Untersteuerungswerte in Schritt 504 auf den neuesten Stand gebracht worden sind. Wenn das PWRUP-Kennzeichen in Schritt 382 eingestellt worden ist, schreitet der Algorithmus fort zu Schritt 498. Hier werden die LIMHI und LIMLO-Werte durch die Untersteuerungswerte UNDR und UNDL modifiziert. Danach wird in Schritt 499 die Prüfgrenzroutine, bestehend aus den Schritten 700 bis 708 nach Figur 7 ausgeführt. Danach führt der Schritt 500 dann, wenn ein Kommando "Bewegungsstop" in Schritt 499 erzeugt worden ist, den Algorithmus zurück zu Schritt 217. Wenn ein "Rechtsbewegen" oder "Linksbewegen"-Kommando erzeugt worden ist, geht der Algorithmus über zu Schritt 402. Dieser Schritt leitet das erzeugte Bewegungskommando zu dem Mikroprozessorausgang P10 oder P11, so daß die gewünschte automatische Stutzenbewegung ausgeführt wird. Der Schritt 502 löscht außerdem das "AUTO2"-Kennzeichen, löscht den Untersteuerungsverzögerungszeitgeber (so daß ein neuer Verzögerungswert nicht ausgerechnet wird, bis die Stutzenbewegung beendet ist) und startet den Relaisverzögerungszeitgeber, um zu verhindern, daß die Relaisfühleingänge P04 und P05 geprüft werden, bis eine kurze Zeit nach Startbeginn der Stutzenbewegung. Nach 502 geht der Algorithmus zurück zu Schritt 217.

Es wird nun Bezug genommen auf Schritt 494. Wenn der Untersteuerungsverzögerungszeitgeber ausgelaufen ist wird der Algorithmus zu Schritt 504 geleitet. Dort werden die Kennzeichen "AUTO" und "AUTO2" gelöscht. Der Wert des Streichmodus-Schrittzählers wird fortgeschrieben und die Untersteuerungswerte UNDR und UNDL werden wie folgt neu berechnet: UNDR = UNDR + (SPOUTN - TPSPOU) sowie UNDL = UNDL + (TPSPOU - SPOUTN). Hierbei sind die SPOUTN-Werte in Schritt 508 in einem zweiten Register für die gewünschte Stutzenstellung gespeichert. Diese Untersteuerungswerte UNDR und UNDL werden in den zuvor beschriebenen Schritten 428 und 430 verwendet, um die Zielstellungen für den Stutzen auszurechnen.

Das bedeutet, daß die Untersteuerungswerte in Schritt 504 nicht auf den neuesten Stand gebracht werden, bis der Schritt 494 bestimmt hat, daß der Verzögerungszeitgeber für die Untersteuerung (1 Sekunde) ausgelaufen ist. Nach Schritt 504 kehrt der Algorithmus zu 217 zurück.

Es wird nun Bezug genommen auf Schritt 492. Wenn das "AUTO2"-Kennzeichen gelöscht worden ist (z.B. in den Schritten 502 oder 504) dann wird der Schritt 492 den Algorithmus zu Schritt 506 leiten. Hier wird bestimmt, ob der Stutzen über die Zielstellung, die durch den "TARGET"-Wert in den Schritten 428 und 430 repräsentiert ist, hinausgegangen ist. Wenn nicht, kehrt der Algorithmus zu Schritt 217 zurück. Wenn ja, schaltet der Algorithmus fort zu Schritt 508, der:

a) ein Kommando "Bewegungsstop" erzeugt,

b) den laufenden Wert SPOUTN für die gewünschte Stutzenstellung speichert, und zwar in einem zweiten Register (getrennt von dem ersten Register, welches den SPOUTN-Wert von Schritt 388 enthält) zur Verwendung bei der Bestimmung der Untersteuerungswerte in Schritt 504,

c) den Zeitverzögerungszeitgeber für die Untersteuerung auslöst,

d) den Zeitverzögerungszeitgeber für den Streichmodus startet,

e) das "AUTO2"-Kennzeichen einstellt und

f) den Relaiszeitverzögerungszeitgeber startet.

Nach Schritt 508 kehrt der Algorithmus zurück zu Schritt 217.

Es wird nun Bezug genommen auf Schritt 490. Wenn das Kennzeichen "AUTO" nicht eingestellt worden ist, z.B. wenn es in Schritt 504 gelöscht worden ist, dann leitet der Schritt 490 den Algorithmus zu Schritt 510. Dieser führt erneut die Schritte 700 bis 708 der Prüfgrenzroutine nach Fig. aus. Wenn ein Kommando "Rechtsbewegen" oder "Linksbewegen" erzeugt worden ist, leitet der Schritt 512 den Algorithmus zu Schritt 514. Dieser Schritt 514 führt folgende Operationen aus:

a) die Ausgangswerte des Bewegungskommandos werden zu den Ausgängen P10 oder P11 des Mikroprozessors geleitet,

b) es wird das Kennzeichen "AUTO" eingestellt,

c) der Verzögerungszeitgeber für die Untersteuerung wird gelöscht,

d) es wird der Verzögerungszeitgeber für die Relais gestartet und

e) es wird das Kennzeichen für den Streichmodus gelöscht.

Nach Schritt 514 kehrt der Algorithmus zu Schritt 217 zurück. Wenn in Schritt 512 das Bewegungskommando lautete "Stop", leitet der Schritt 512 den Algorithmus zu den Schritten 516 bis 526 (Figur 4p). Diese Schritte bestimmen, ob der Zeitverzögerungszeitgeber für den Streichmodus läuft, ob das Hysteresis-Kennzeichen eingestellt ist (um die Betätigung nach dem Streichmodus bei Kurvenfahrt zu verhindern), ob der Schalter 104 für den Streichmodus offen ist, und ob das Kennzeichen für das Streichmodus eingestellt worden ist (z.B. in 526). Wenn das Ergebnis irgend einer dieser Bestimmungen der Schritte 516 bis 520 positiv ist, wird der Algorithmus zu Schritt 217 geleitet und keine Stutzenbewegung ausgelöst. Wenn die Ergebnisse der Schritte 516 bis 520 alle negativ sind, dann schreitet der Algorithmus zu 522 fort, der ihn weiterleitet zu Schritt 524, sofern das Kennzeichen für den Streichmodus nicht eingestellt worden ist. Der Schritt 524 verhindert eine Einstellung des Kennzeichens für den Streichmodus in Schritt 526, sofern sich nicht der Stutzen innerhalb des zentralen 25%-Bereiches des Stellungsbereiches zur Aufnahme des Erntegutes durch den Wagen befindet. Dies verhindert, daß der Stutzen weitergeschaltet wird, wenn die Bedienungsperson den Stutzen in eine Stellung außerhalb dieses zentralen 25%-Bereiches herausbewegt, um einen Wagen zu füllen, und gleichzeitig eine Kompensation für die Seitenhanglage oder den Querwind vorzunehmen. Wenn die Bedingung des Schrittes 524 erfüllt ist, wird das Streichmoduskennzeichen im Schritt 526 eingestellt und das nächstemal wird der Schritt 522 den Algorithmus zu Schritt 528 leiten. Dieser führt dazu, daß der Stutzen in Richtung auf seine nächste Zielstellung im Streichmodus gleitet wird, wie diese durch die Schritte 423, 428 und 430 bestimmt ist. Der Schritt 528 startet erneut den Zeitverzögerungszeitgeber für den Streichmodus und stellt das Kennzeichen für die automatische Bewegung ein. Nach den Schritten 526 und 528 kehrt der Algorithmus zurück zu Schritt 517.

Es wird nun auf Fig. 7 Bezug genommen. Die Prüfgrenz- und Kommandoerzeugungsroutine beginnt bei Schritt 700. Dieser bestimmt, ob der gefühlte Stutzenstellungswert TSPOU größer als der Endpunktwert LIMHI des Stutzenstellungsbereiches ist. Wenn ja, schaltet die Routine fort zu den Schritten 704 und 710. Diese veranlassen die Erzeugung und die Weitergabe eines Kommandosignals "Rechtsbewegen", wodurch das Relais 90 aktiviert und der Stutzen 14 nach rechts bewegt wird. Wenn nicht, schreitet die Routine fort zu Schritt 702. Diese bestimmt, ob der gefühlte Stutzenstellungswert TSPOU kleiner als der Endpunktwert LIMLO des Stutzenstellungsbereiches ist. Wenn ja, geht die Routine zu den Schritten 706 und 710 über. Hierbei wird ein Kommandosignal "Linksbewegen" erzeugt und weitergegeben, welches das Relais 92 aktiviert und den Stutzen 14 nach links bewegt. Wenn nicht, wird die Routine zu den Schritten 708 und 710 geleitet. Hier wird die Erzeugung und Weitergabe von "Stop"-Kommandosignalen veranlaßt, welche beide Relais 90 und 92 abschalten und so einen Stillstand der Stutzenbewegung 14 hervorrufen.

Auf diese Weise erzeugt die Routine Kommandosignale, welche den Stutzen 14 in Richtung auf den Bereich der Stutzenstellungen hin bewegt, in denen der Wagen das Erntegut aufnimmt und der durch die Grenzwerte LIMHI und LIMLO bestimmt wird, nachdem die Bedienungsperson eine manuelle Bewegung des Stutzens 14 außerhalb dieses Bereiches durch Verwendung des Schalters 51 beendet hat. Wenn somit die Erntegutmaschine durch einen Distelbereich geht, kann die Bedienungsperson den Stutzen außerhalb des Stellungsbereiches durch Verwendung des Schalters 51 verschwenken, indem der Wagen das Erntegut normalerweise aufnimmt. Wenn dann der Schalter 51 wieder abgeschaltet wird, kehrt der Stutzen 14 zu der Kante des Erntegutaufnahmebereiches zurück, und zwar in Abhängigkeit von den Kommandosignalen, die in den Schritten 448 oder 466 erzeugt werden.

Es wird nun Bezug genommen auf Fig. 8. Die manuelle Testroutine beginnt bei 802. Bei diesem werden die Signale an den Mikroprozessor-Relaisfühleingängen P04 und P05 verglichen mit den Signalen an den Kontrollausgängen P10 und P11, um zu bestimmten, ob ein Signal an den Leitungen 66 oder 68 vorliegt, ohne daß ein Betätigungssignal an dem korrespondierenden Kontrollausgang vorhanden ist. Wenn dies der Fall ist, wird dies interpretiert als manuelle Betätigung über den Schaltmodul 50 und der Schritt 804 leitet die Routine zu Schritt 806. Wenn nicht, bedeutet dies, daß eine manuelle Betätigung nicht ausgeführt worden ist und der Schritt 804 schaltet die Routine zurück zum Hauptalgorithmus. Es wird darauf hingewiesen, daß dann, wenn Relais 90 oder 92 erst kürzlich abgeschaltet worden ist (was angezeigt wird dadurch, daß der Relaisverzögerungszeitgeber noch läuft), dann wird das entsprechende Links- oder Rechts-Signal das vorliegen mag, nicht als ein manueller Eingang behandelt.

Bei Schritt 806 werden die folgenden Vorgänge ausgeführt: Die Kontrollausgänge P10 und P11 werden abgeschaltet, um eine automatische Bewegung des Stutzen 14 zu verhindern; ein Kennzeichen für manuelle Arbeitsweise wird eingestellt; ein Kennzeichen für automatische Arbeitsweise und ein Kennzeichen für den Streichmodus werden gelöscht; der Verzögerungszeitgeber für den Streichmodus wird erneut eingestellt; der Verzögerungszeitgeber für eine Kurvenfahrt wird gelöscht; der Zeitverzögerungszeitgeber für eine Untersteuerung wird gelöscht; die Routine kehrt dann zum Hauptalgorithmus zurück, so daß die manuelle Kontrolle des Stutzens ohne Störung fortgesetzt werden kann.

Die Überführung der oben beschriebenen Fließkarte in Standartsprache, um den durch die Fließkarte beschriebenen Algorithmus mit entsprechenden Elementen in einem Digitaldatenprozessor zu bestücken, z.B. einen Mikroprozessor, ist für den Fachmann kein Problem.

Während die Erfindung in Verbindung mit einer speziellen Ausführungsform beschrieben worden ist, ist ersichtlich, daß zahlreiche Alternativen und Modifikationen sowie Änderungen durch den Fachmann vorgenommen werden können, und zwar unter Berücksichtigung der grundsätzlichen Angaben in der vorstehenden Beschreibung. Das beschriebene Steuersystem könnte auch so angepaßt werden, um den Abgabestutzen irgend einer landwirtschaftlichen Maschine in Verbindung mit einem angehängten Sammelfahrzeug oder in Verbindung mit einem nicht angehängten Sammelfahrzeug zu steuern, unter Verwendung eines nicht mechanischen Stellungsfühler für das Sammelfahrzeug. Die Erfindung soll all diese Alternativen, Modifikationen und Variationen umfassen, die innerhalb des Umfanges der angefügten Ansprüche fallen.

## Patentansprüche

**1.** Futtererntemaschine (10) mit einem das Erntegut auf einen dieses aufnehmenden Wagen (18) gerichtet ausstoßenden Stutzen (14), der mittels eines Schwenkantriebes und eines diesen steuernden elektronischen Steuersystems (22) gegenüber der Erntemaschine und dem Wagen automatisch und manuell verschwenkbar ist, bei der das Steuersystem (22)

- Fühlermittel (60,62) zum Abtasten der relativen Schwenkstellung des Stutzens (14) und der relativen Ausrichtung von Erntemaschine (10) und Wagen (18) und
- einen programmierten digitalen Computer (80) aufweist, dessen Programm folgende Programmabschnitte umfaßt:
- erste Modusmittel (408,422,423-430) zum Steuern des Schwenkantriebes (24) nach dem Programm so, daß der Stutzen (14) während der Geradeausfahrt der Erntemaschine (10) und des Wagens (18) automatisch und nacheinander in eine Mehrzahl von unterschiedlichen, innerhalb eines vorbestimmtes Schwenkbereiches vorgesehene Stellungen periodisch verschwenkt wird;

- zweite Modusmittel (374,376,384,378,386,406,414,418 und 420) zum Steuern des Schwenkantriebes (24) nach dem Programm so, daß der Stutzen (14) während der Dauer einer Kurvenfahrt von Erntemaschine (10) und Wagen (18) automatisch in einen gegenüber dem Schwenkbereich engen Winkelbereich relativ zum Wagen (18) ausgerichtet ist;
- Auwahlmittel (376,378,380,406,408,422), welche in Abhängigkeit von den Signalen der Fühlermittel (60,62) und nach dem Programm von den ersten auf die zweiten Modusmittel oder umgekehrt automatisch umschalten; sowie
- Überwachungsmittel (376,378,384,422,440-483,802), welche automatisch auf das Ende der manuellen über das Steuersystem (22) erfolgenden Steuerung bzw. auf das Ende der Steuerwirkung der zweiten Modusmittel ansprechen, den Stutzen (14) in den den ersten Modusmitteln zugeordneten, vorbestimmten Schwenkwinkelbereich zurückführen, wenn er sich außerhalb dieses Bereiches befindet, und die ersten Modusmittel dann automatisch zur Wirkung bringen.

**2.** Futtererntemaschine nach Anspruch 1, dadurch **gekennzeichnet**, daß manuelle Steuermittel (50) des Steuersystems (229 zur Übersteuerung der Computerproramm-Steuerung des Schwenkantriebes (24) und zum Schwenken des Stutzens (14) über den den ersten Modusmitteln zugeordneten Schwenkbereich hinaus ausgebildet sind, und das Computerprgramm Mittel (482,514,516, Zeitgeber 1, 806, Zeitgeber 2) umfaßt, welche die Steuerwirkung der ersten Modusmittel auf den Schwenkantrieb (24) automatisch unterbrechen, wenn die manuellen Steuermittel (50) oder die zweiten Modusmittel steuerwirksam sind.

**3.** Futtererntemaschine nach Anspruch 1 oder 2, dadurch **gekennzeichnet**, daß das Computerprogramm Testmittel (802-806) zum Feststellen einer manuellen Steuerung des Schwenkantriebes (24) aufweist, sowie Mittel, die auf das Ende der manuellen Steuerung ansprechen und Prüfmittel (446,448) des Computerprogramms zur Wirkung bringen, welche die Feststellung der Ist-Stellung des Stutzens (14) nach Beendigung der manuellen Steuerung, die Rückführung des Stutzens (14) in den vorbestimmten Winkelbereich sowie das Wirksamwerden der ersten Modusmittel auslösen.

**4.** Futtererntemaschine nach einem der Ansprüche 1 bis 3, dadurch **gekennzeichnet**, daß die ersten Modusmittel des Computerprogramms einen Schrittzähler sowie Mittel (423,540-554) aufweisen, um den Zählerinhalt des Schrittzählers festzustellen und daraus nach einem vorgegebenen Programm den jeweils nächsten Stellungswert (SPOUT) des Stutzens (14) zu ermitteln (550-554) und den Schwenkantrieb entsprechend zu steuern und jedesmal den Zählinhalt des Schrittzählers nach dem Programm zu ändern.

**5.** Futtererntemaschine nach Anspruch 4, dadurch **gekennzeichnet**, daß der Schrittzähler und die Mittel (423,540-554) zum Feststellen des Zählerinhaltes so ausgebildet sind, daß sie für den Stutzen (14) eine im wesentlichen mittig auf den Wagen ausgerichtete, zentrierte Stellung und je zwei weitere Schwenkstellungen beiderseits dieser zentrierten Stellung festlegen.

**6.** Futtererntemaschine nach Anspruch 5, dadurch **gekennzeichnet**, daß die Stellungen zwei und fünf beiderseits der ersten Stellung liegen und sich die Stellung drei zwischen den Stellungen eins und fünf und die Stellung vier zwischen den Stellungen eins und zwei befinden.

**7.** Futtererntemaschine nach einem der Ansprüche 2 bis 6, dadurch **gekennzeichnet**, daß das Computerprogramm erste Verzögerungszeitgebermittel (Software-Zeitgeber 1 und 2) aufweist, um bei Wirkung der ersten Modusmittel den Schwenkantrieb (24) so zu steuern, daß der Stutzen (14) in jeder seiner vorbestimmten Schwenkstellungen für eine vorbetimmte Zeitdauer verharrt und den Beginn der Steuerwirkung der ersten Modusmittel nach Ende der Steuerwirkung der manuellen Steuermittel (50) bzw. der zweiten Modusmittel umeine vorbestimmte Zeitdauer zu verzögern.

**8.** Futtererntemaschine nach einem der Ansprüche 1 bis 7, dadurch **gekennzeichnet**, daß das Steuersystem (22) Kalibrierungsmittel (74,76,78) für die Fühlermittel (60,62) bzw.

zum Erfassen von Abmessungen oder anderen Kenngrößend es Wagens (18) und das Computerprogramm Mittel (286-292) zum Abtasten der Kalibrierungsmittel aufweisen, welche den ersten Modusmitteln zugeordnet sind.

**9.** Futtererntemaschine nach einem der Ansprüche 1 bis 8, dadurch **gekennzeichnet**, daß die Ansprechbereiche der Fühlermittel (60,62) für den Stutzenwinkel bzw. den Winkel zwischen Erntemaschine (10) und Wagen (18) jeweils auf einen vorbestimmten, gegenüber den möglichen Winkeln eingeengten Winkelbereich beschränkt sind, und daß das Computerprogramm Ansprechmittel (294,302,310,312) aufweist, welche ansprechen, wenn die abgetasteten Werte von den Fühlermitteln (60,62) außerhalb der eingeengten Winkelbereiche liegen, um Alarmsignalmittel (356,360 bzw. 350,354) auszulösen.

**Claims**

**1.** Forage harvester (10) with a spout (14) directed towards, and ejecting the harvested material on to, a vehicle (18) receiving said material, said spout (14), by means of a pivot drive and an electronic control system (22), being automatically and manually pivotable with respect to the harvester and to the vehicle, in which the control system (22):
- comprises sensor means (60, 62) for scanning the relative pivoted position of the spout (14) and the relative alignment of harvester (10 and vehicle (18), and
- has a programmed digital computer (80), whose program includes the following program items:
- first mode means (408, 422, 423-430) for controlling the pivotal drive (24) according to the program, in such a way that the spout (14), during straight-ahead travel of the harvester (10) and of the vehicle (18), is periodically, automatically and sequentially pivoted into a plurality of different positions within a predetermined pivotal range;
- second mode means (374, 376, 384, 378, 386, 406, 414, 418 and 420) for controlling the pivotal drive (24) according to the program, in such a way that the spout (14), within the duration of a curved path of travel of harvester (10) and vehicle (18), is automatically aligned with respect to the vehicle (18) in an angular range which is narrow in comparison to the pivotal range;
- selector means (376, 378, 380, 406, 408, 422) which, in dependence on the signals from the sensor means (60, 62) and according to the program, switch over automatically from the first to the second mode means or vice versa; and
- monitoring means (376, 378, 384, 422, 440-483, 802) which respond automatically to the end of manual control effected via the control system (22), or to the end of the control action of the second mode means, returning the spout (14) into the predetermined pivotal range associated with the first mode means when it is located outwith this range, and then automatically bringing the first mode means into force.

**2.** Forage harvester according to Claim 1, characterised in that there are provided manual control means (50) of the control system (229) for overriding the computer program control of the pivotal drive (24) and for pivoting the spout (14) beyond the pivotal range associarted with the first mode means, and the computer program includes means (482, 514, 516, timer 1, 806, timer 2), which automatically interrupt the control action of the first mode means on the pivotal drive (24) when the manual control means (50) or the second mode means are in effective control.

**3.** Forage harvester according to Claim 1 or 2, characterised in that the computer program has test means (802-806) for detecting manual control of the pivotal drive (24), and means which respond to the end of manual control, and bring into action examining means (446, 448) of the computer program, which initiate detection of the actual position of the spout (14) after termination of manual control, of the return of the spout (14) into the predetermined angular range, and of the coming into effect of the first mode means.

**4.** Forage harvester according to one of Claims 1 to 4, characterised in that the first mode means of the computer program have a step counter and means (423, 540-554) of ascertaining the counter contents of the step counter, and of determining (550-554) therefrom, according to a predetermined program, the next positional value respectively (SPOUT) of the spout (14), of controlling the pivotal drive correspondingly, and on each occasion of altering the counter content of the step counter according to the program.

**5.** Forage harvester according to Claim 4, characterised in that the step counter and the means (423, 540-554) of determining the counter content are so designed that they fix for the spout (14) a centred position directed substantially centrally on to the vehicle, and in each case two further pivotal positions on either side of this centred position.

6. Forage harvester according to Claim 5, characterised in that the positions two and five lie on either side of the first position, and position three is located between positions one and five, and position four between positions one and two.

7. Forage harvester according to one of Claims 2 to 6, characterised in that the computer program has first delay timer means (software timers 1 and 2), in order to control the pivotal drive (24), during operation of the first mode means, in such a way that the spout (14) remains in each of its predetermined pivotal positions for a predetermined period of time, and in order, after the end of the control action of the manual control means (50) or of the second mode means, to delay the start of the control effect of the first mode means by a predetermined period of time.

8. Forage harvester according to one of Claims 1 to 7, characterised in that the control system (22) has calibrating means (74, 76, 78) for the sensor means (60, 62) or for detecting dimensions or other parameters of the vehicle (18), and the computer program has means (286-292), which are associated with the first mode means, for scanning the calibrating means.

9. Forage harvester according to one of Claims 1 to 8, characterised in that the areas of response of the sensor means (60, 62) for the spout angle or the angle between harvester (10) and vehicle (18) are respectively limited to a predetermined angular area narrowed in comparison to the possible angles, and in that the computer program has response means (294, 302, 310, 312) which respond when the scanned values from the sensor means (60, 62) lie outwith the narrowed angular areas, in order to release alarm signal means (356, 360 or 350, 354).

## Revendications

1. Récolteuse de fourrage (10), avec une goulotte (14) qui éjecte le produit récolté de manière dirigée sur une remorque (18) recevant ce produit et qui, au moyen d'un entraînement de pivotement et d'un système de commande électronique (22) commandant ce dernier, peut être pivotée manuellement et automatiquement par rapport à la récolteuse et à la remorque, dans laquelle le système de commande (22) présente:
   - des détecteurs (60,62) pour détecter la position relative de pivotement de la goulotte (14) et l'orientation relative de la récolteuse (10) et de la remorque (18), et
   - un calculateur numérique programmé (80), dont le programme comprend les séquences suivantes:
   - des moyens de premier mode (408,422,423-430) pour commander l'entraînement de pivotement (24), d'après le programme, de telle sorte que la goulotte (14), pendant la marche en ligne droite de la récolteuse (10) et de la remorque (18), est périodiquement pivotée automatiquement et successivement dans une multiplicité de positions différentes, prévues à l'intérieur d'une plage de pivotement prédéterminée;
   - des moyens de second mode (374,376,384,378,386,406,414,418 et 420) pour commander l'entraînement de pivotement (24), d'après le programme, de telle sorte que la goulotte (14), pendant la durée d'un virage de la récolteuse (10) et de la remorque (18), est automatiquement orientée, par rapport à la remorque (18), dans une plage angulaire qui est étroite comparée à la plage de pivotement;
   - des moyens de sélection (376,378,380,406,408,422) qui, en fonction des signaux des détecteurs (60,62) et d'après le programme, font passer automatiquement des moyens de premier mode aux moyens de second mode ou vice-versa; et
   - des moyens de surveillance (376,378,384,422,440-483,802), qui réagissent automatiquement à la fin de la commande manuelle, commande se déroulant par l'intermédiaire du système de commande (22), ou encore à la fin de l'action de commande des moyens de second mode, ramènent la goulotte (14) dans la plage prédéterminée d'angle de pivotement associée aux moyens de premier mode si la goulotte se trouve en dehors de cette plage, et mettent alors automatiquement en action les moyens de premier mode.

2. Récolteuse de fourrage selon la revendication 1, caractérisée en ce que sont prévus des moyens de commande manuelle (50) du système de commande (22) pour surpasser la commande par programme informatique de l'entraînement de pivotement (24) et faire pivoter la goulotte (14) au-delà de la plage de pivotement associée aux moyens de premier mode, et le programme informatique comprend des moyens (482,514,516, horloge 1, 806, horloge 2) qui interrompent automatiquement l'action de commande des moyens de premier mode sur l'entraînement de pivotement (24) si les moyens de commande manuelle (50) ou les moyens de second mode sont actifs pour la commande.

**3.** Récolteuse de fourrage selon la revendication 1 ou 2, caractérisée en ce que le programme informatique comprend des moyens de test (802-806) pour constater une commande manuelle de l'entraînement de pivotement (24), ainsi que des moyens qui réagissent à la fin de la commande manuelle et mettent en action des moyens de contrôle (446,448) du programme informatique, qui déclenchent la constatation de la position effective de la goulotte (14) à la suite de l'achèvement de la commande manuelle, le retour de la goulotte (14) dans la plage angulaire prédéterminée ainsi que l'entrée en action des moyens de premier mode.

**4.** Récolteuse de fourrage selon l'une des revendications 1 à 3, caractérisée en ce que les moyens de premier mode du programme informatique présentent un compteur pas à pas ainsi que des moyens (423,540-554) pour constater le compte du compteur pas à pas et, d'après ce compte et selon un programme alloué, déterminer (550-554) chaque fois la valeur de position suivante (SPOUT) de la goulotte (14) et commander d'une manière correspondante l'entraînement de pivotement, et modifier chaque fois le compte du compteur pas à pas d'après le programme.

**5.** Récolteuse de fourrage selon la revendication 4, caractérisée en ce que le compteur pas à pas et les moyens (423,540-554) pour constater le compte sont conçus de telle sorte qu'ils déterminent pour la goulotte (14) une position centrée, orientée sensiblement au milieu de la remorque, et deux positions de pivotement supplémentaires de chaque côté de cette position centrée.

**6.** Récolteuse de fourrage selon la revendication 5, caractérisée en ce que les positions "deux" et "cinq" se trouvent de part et d'autre de la première position, la position "trois" se trouve entre les positions "un" et "cinq" et la position "quatre" entre les positions "un" et "deux".

**7.** Récolteuse de fourrage selon l'une des revendications 2 à 6, caractérisée en ce que le programme informatique présente des moyens d'horloge de premier délai (horloges de logiciel 1 et 2) pour, lors de l'action des moyens de premier mode, commander l'entraînement de pivotement (24) de telle sorte que la goulotte (14) s'immobilise pendant une durée predéterminée dans chacune de ses positions prédéterminées de pivotement et pour, à la fin de l'action de commande des moyens de commande manuelle (50) ou encore des moyens de second mode, retarder d'une durée prédéterminée le début de l'action de commande des moyens de premier mode.

**8.** Récolteuse de fourrage selon l'une des revendications 1 à 7, caractérisée en ce que le système de commande (22) présente des moyens d'étalonnage (74,76,78) pour les détecteurs (60,62) ou encore pour enregistrer des dimensions ou autres grandeurs caractéristiques de la remorque (18) et le programme informatique présente des moyens (286-292) pour explorer les moyens d'étalonnage qui sont associés aux moyens de premier mode.

**9.** Récolteuse de fourrage selon l'une des revendications 1 à 8, caractérisée en ce que les plages de réaction des détecteurs (60,62) pour l'angle de goulotte ou encore l'angle entre la récolteuse (10) et la remorque (18) sont respectivement limitées à une plage angulaire prédéterminée, rétrécie par rapport aux angles possibles, et en ce que le programme informatique présente des moyens de réaction (294,302,310,312) qui réagissent, si les valeurs balayées par les détecteurs (60,62) se trouvent en dehors des plages angulaires rétrécies, pour déclencher des moyens de signalisation d'alarme (356,360 ou 350,354).

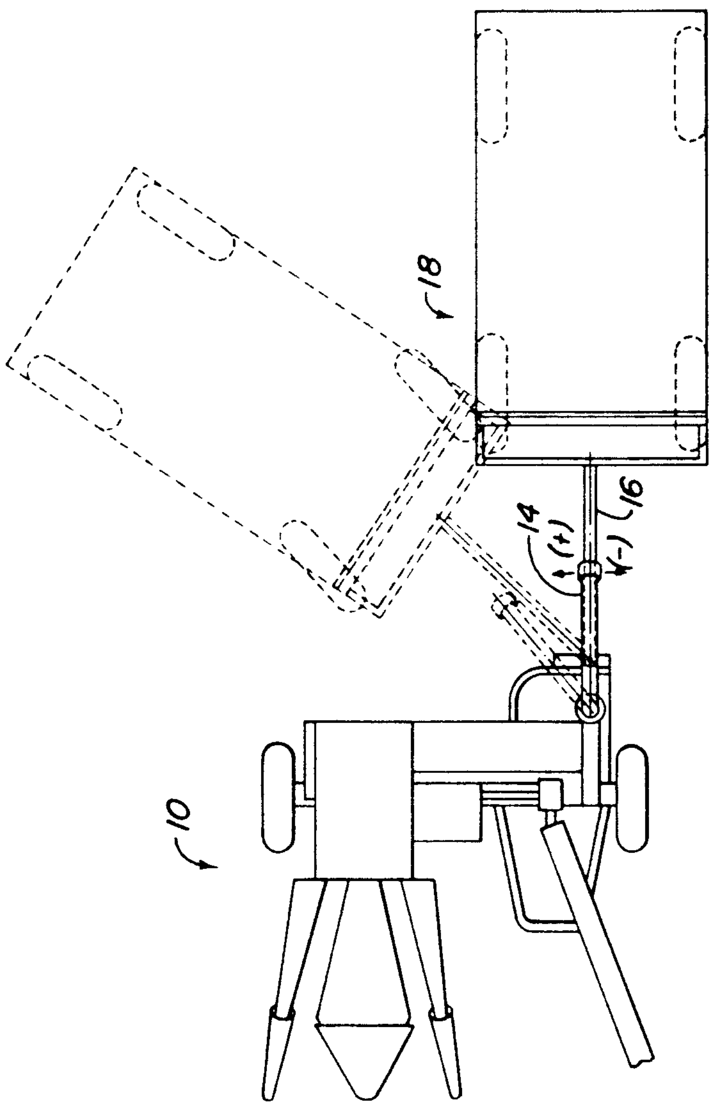


FIG. 1

FIG. 2

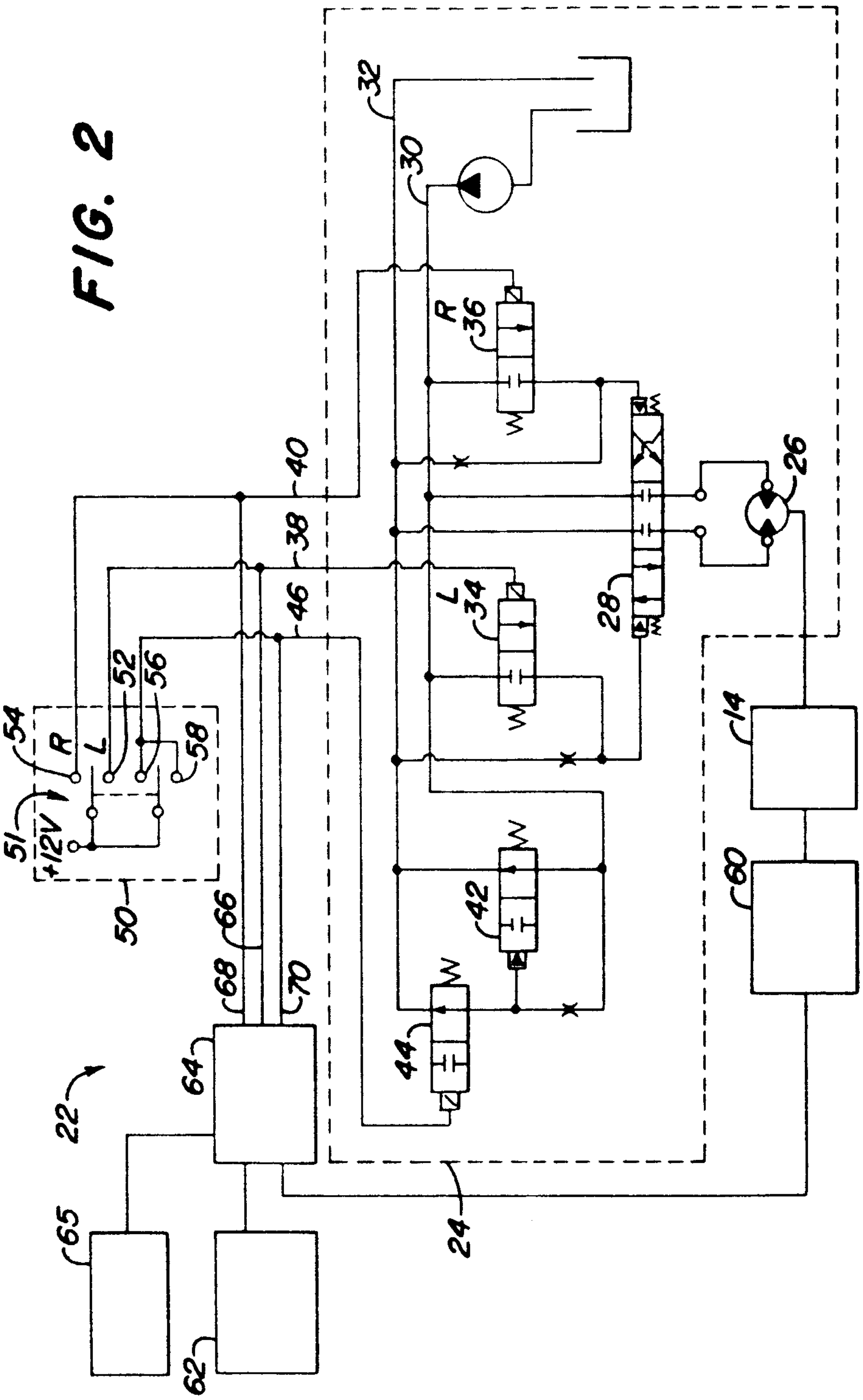
22
24
14
60
62
64
65
66
68
70
50
51
+12V
54
R
L
52
56
58
40
38
46
L
34
R
36
28
26
30
32
42
44

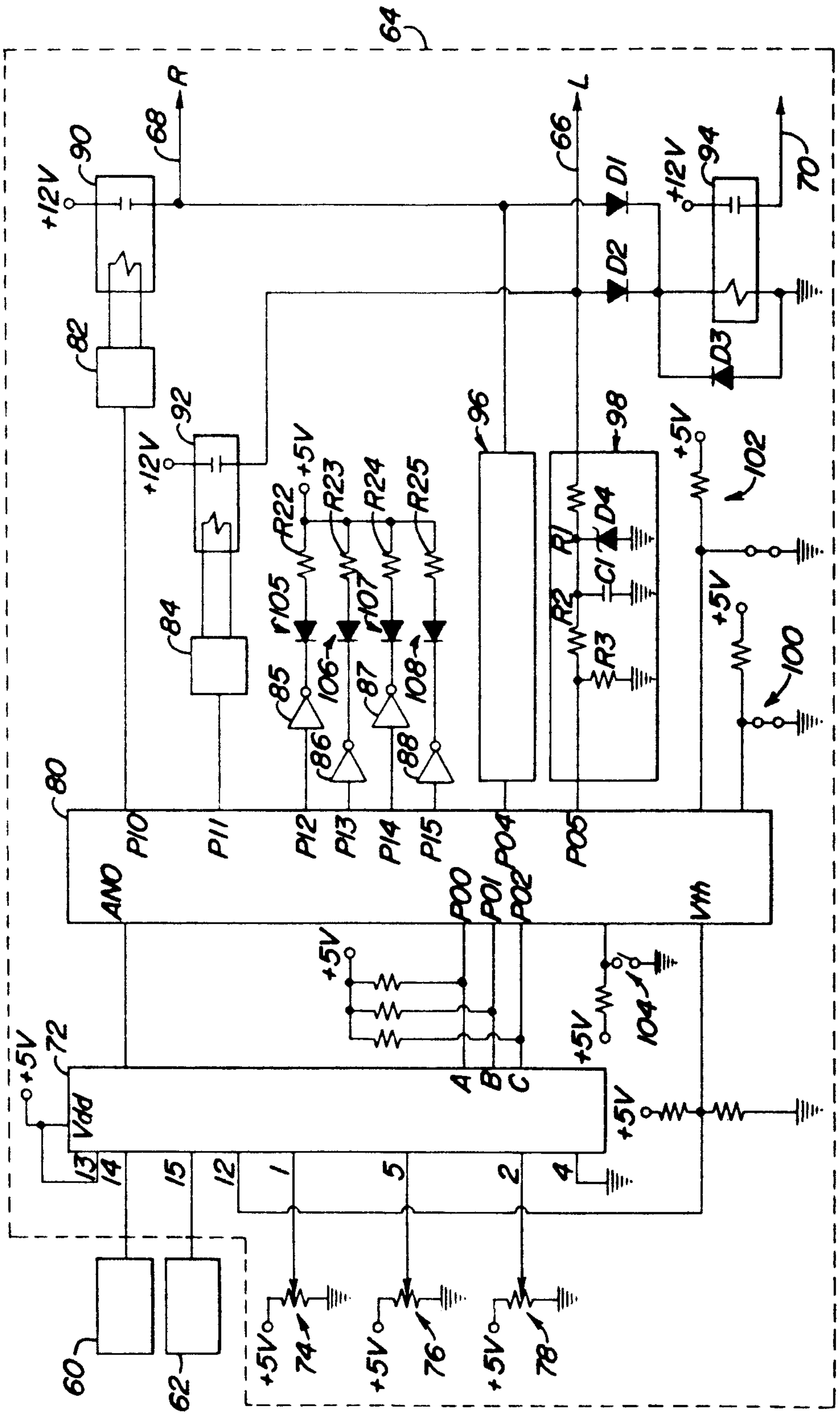
64
R
68
+12V
90
L
66
D1
D2
D3
+12V
94
70
82
92
+12V
+5V
R22
R23
R24
R25
r105
r107
106
108
85
86
87
88
84
96
98
R1
R2
R3
C1
D4
+5V
102
+5V
100
80
P10
P11
P12
P13
P14
P15
P04
P05
AN0
P00
P01
P02
Vth
+5V
104
+5V
72
Vdd
A
B
C
13
14
15
12
1
5
2
4
+5V
60
62
+5V
74
+5V
76
+5V
78

FIG. 3

FIG. 4a

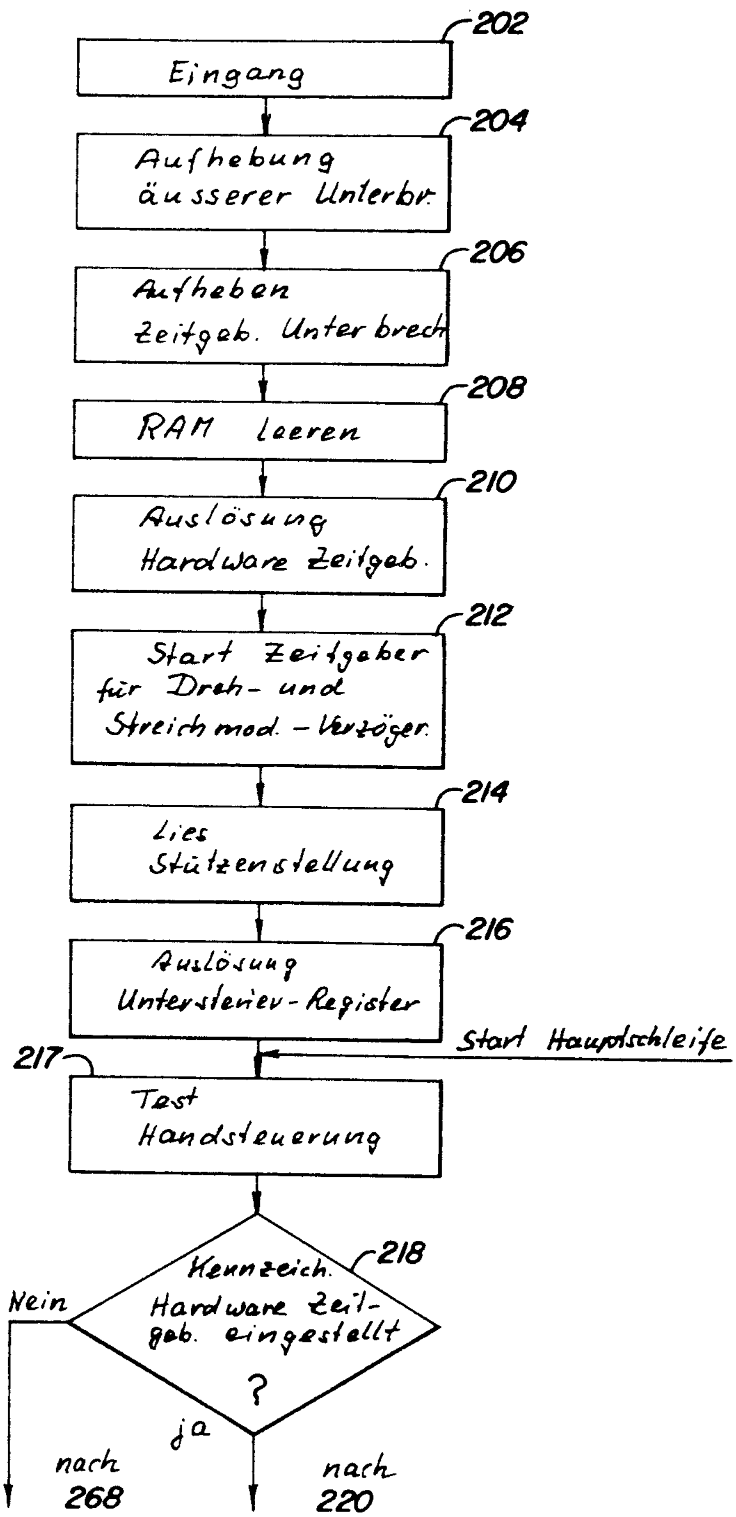
202
Eingang
204
Aufhebung äusserer Unterbr.
206
Aufheben Zeitgeb. Unterbrech
208
RAM leeren
210
Auslösung Hardware Zeitgeb.
212
Start Zeitgeber für Dreh- und Streich mod. - Verzöger.
214
Lies Stützenstellung
216
Auslösung Untersteuer-Register
Start Hauptschleife
217
Test Handsteuerung
218
Kennzeich. Hardware Zeitgeb. eingestellt ?
Nein
ja
nach 268
nach 220

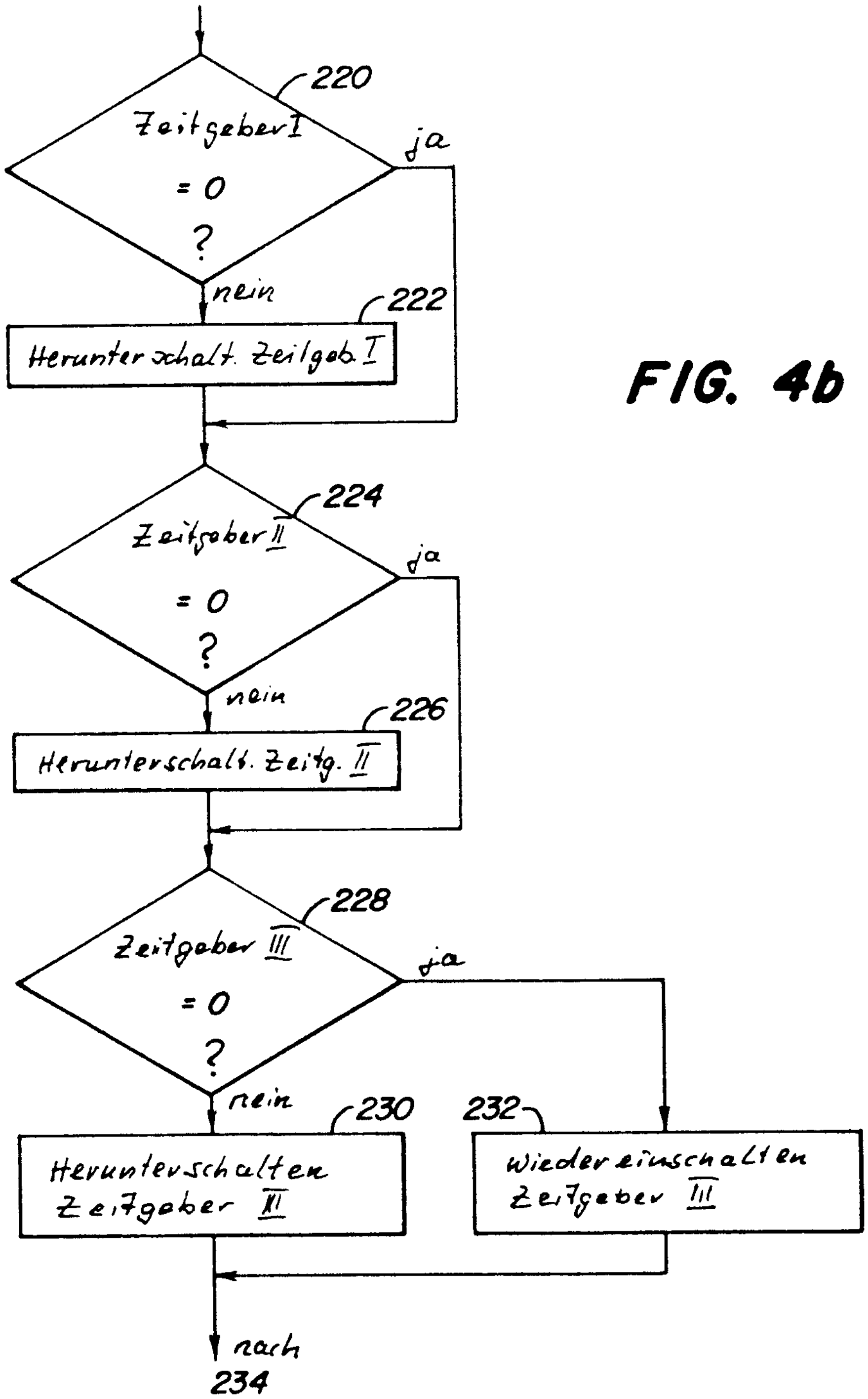
220
Zeitgeber I
= 0
?
ja
nein
222
Herunterschalt. Zeitgeb. I
224
Zeitgeber II
= 0
?
ja
nein
226
Herunterschalt. Zeitg. II
228
Zeitgeber III
= 0
?
ja
nein
230
Herunterschalten
Zeitgeber III
232
Wiedereinschalten
Zeitgeber III
nach
234

FIG. 4b

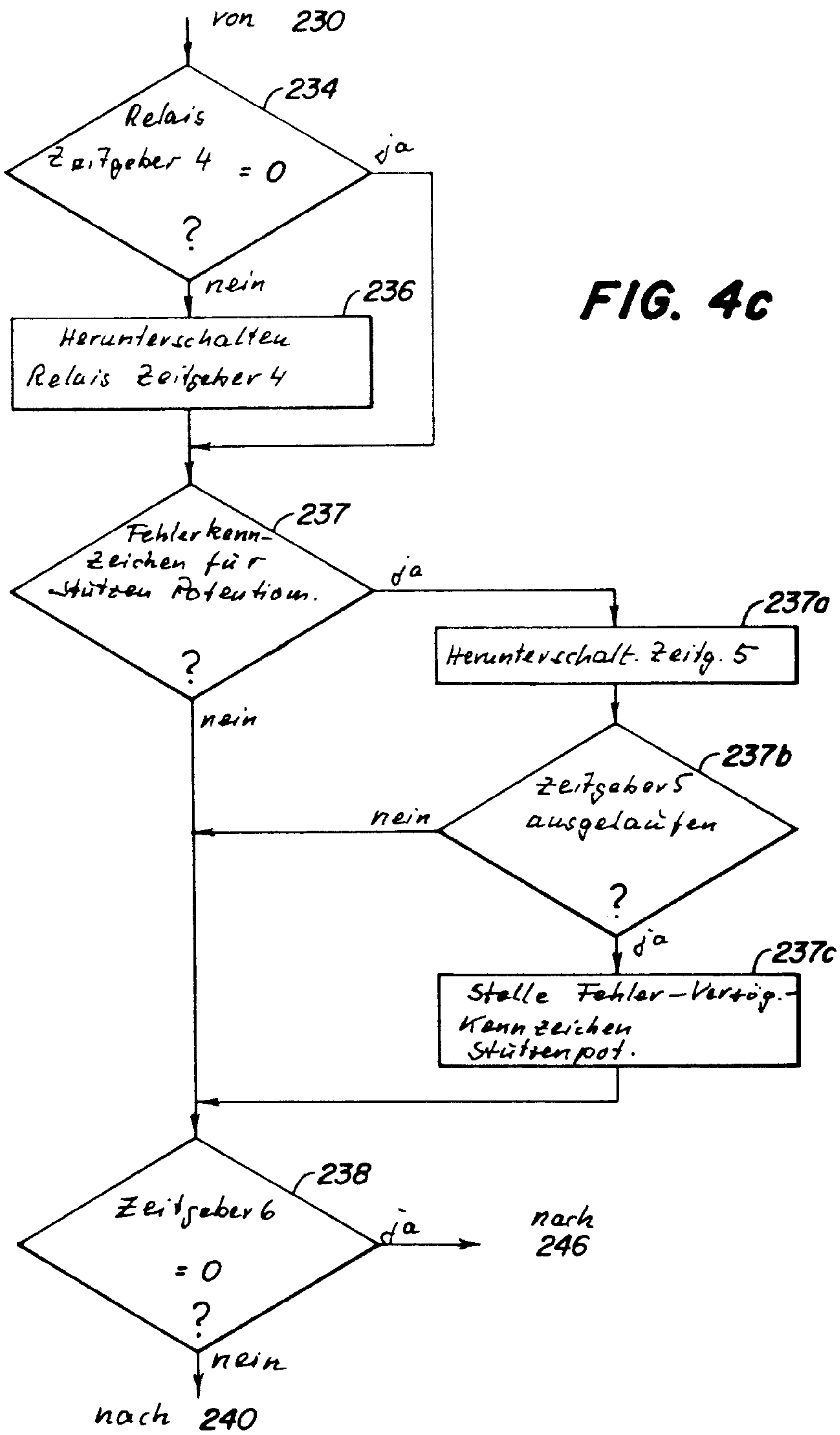
von 230
234
Relais Zeitgeber 4 = 0 ?
ja
nein
236
Herunterschalten Relais Zeitgeber 4
237
Fehlerkennzeichen für Stützen Potentiom. ?
ja
nein
237a
Herunterschalt. Zeitg. 5
237b
Zeitgeber 5 ausgelaufen ?
nein
ja
237c
Stelle Fehler-Verzög.-Kennzeichen Stützenpot.
238
Zeitgeber 6 = 0 ?
ja
nach 246
nein
nach 240

FIG. 4c

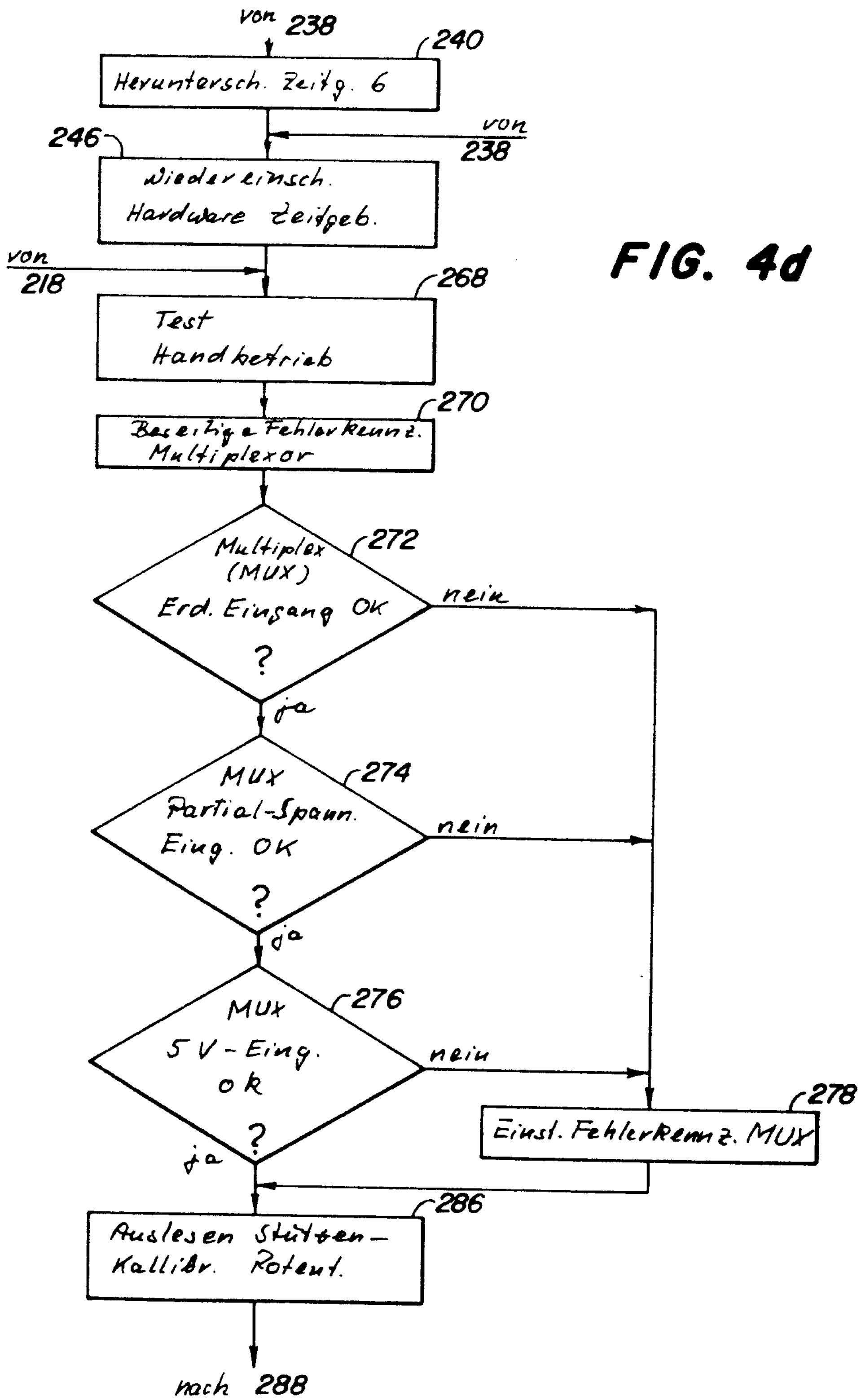
von 238
240
Heruntersch. Zeitg. 6
von 238
246
Wiedereinsch. Hardware Zeitgeb.
von 218
268
Test Handbetrieb
270
Beseitige Fehlerkennz. Multiplexor
272
Multiplex (MUX) Erd. Eingang OK ?
nein
ja
274
MUX Partial-Spann. Eing. OK ?
nein
ja
276
MUX 5 V - Eing. ok ?
nein
ja
278
Einst. Fehlerkennz. MUX
286
Auslesen Stützen-Kallibr. Potent.
nach 288

FIG. 4d

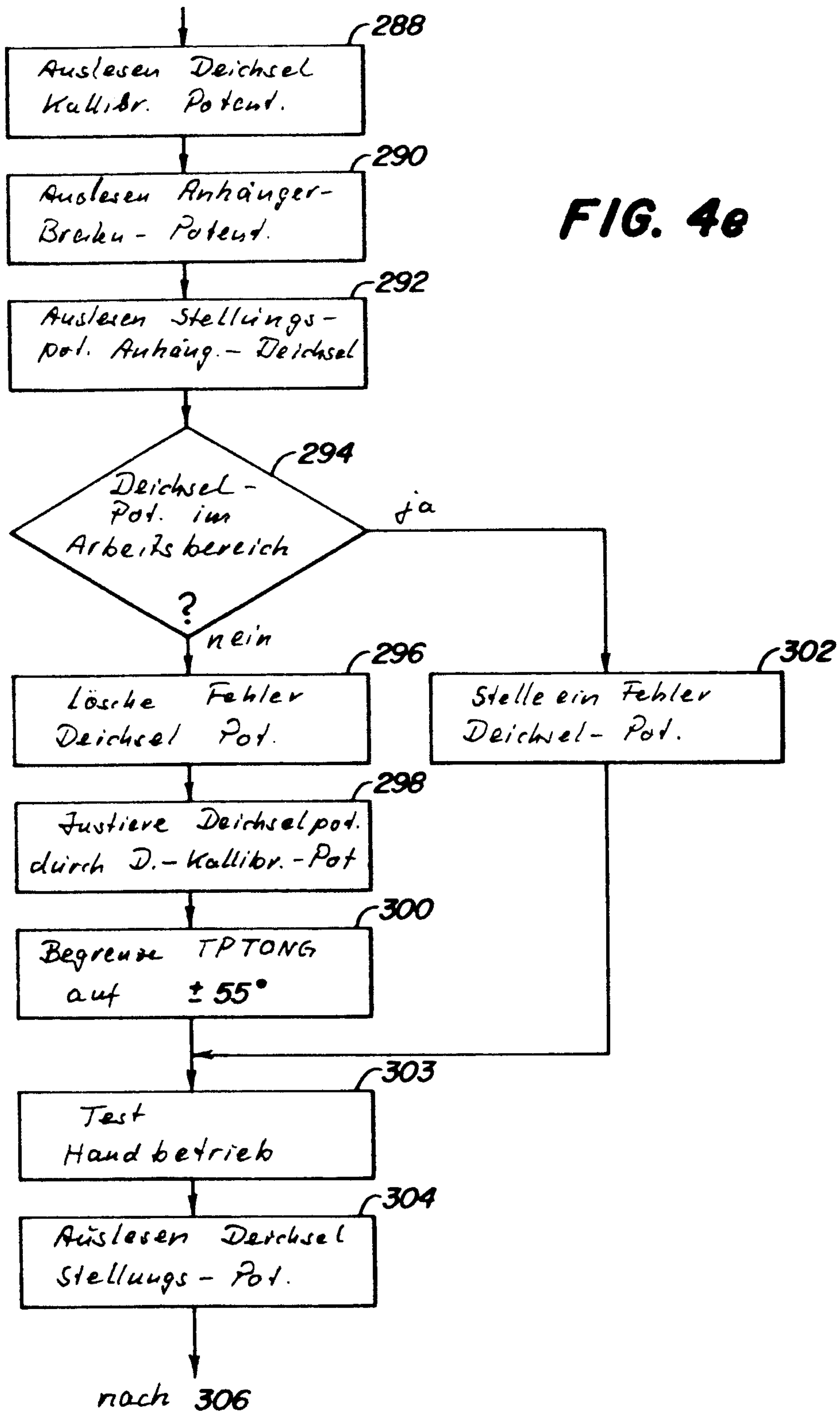
288
Auslesen Deichsel Kallibr. Potent.
290
Auslesen Anhänger-Bremsen-Potent.
292
Auslesen Stellungs-pot. Anhäng.-Deichsel
294
Deichsel-Pot. im Arbeitsbereich ?
ja
nein
296
Lösche Fehler Deichsel Pot.
302
Stelle ein Fehler Deichsel-Pot.
298
Justiere Deichselpot. durch D.-Kallibr.-Pot
300
Begrenze TPTONG auf ± 55°
303
Test Handbetrieb
304
Auslesen Deichsel Stellungs-Pot.
nach 306

FIG. 4e

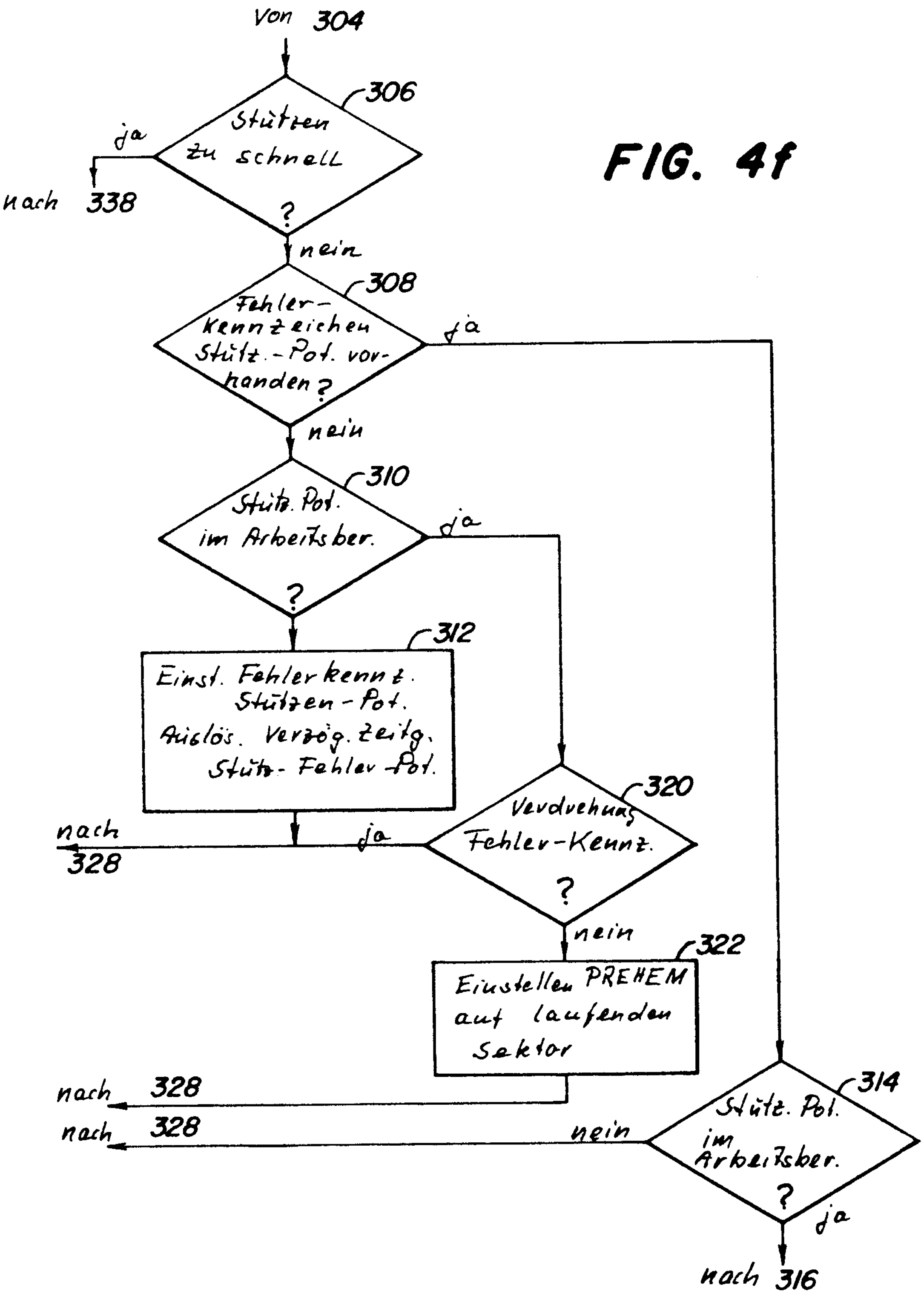
Von 304
306
Stützen zu schnell ?
ja
nach 338
nein
308
Fehler-Kennzeichen Stütz.-Pot. vorhanden ?
ja
nein
310
Stütz. Pot. im Arbeitsber. ?
ja
312
Einst. Fehlerkennz. Stützen-Pot. Auslös. Verzög. zeitg. Stütz-Fehler-Pot.
320
Verdrehung Fehler-Kenn. ?
ja
nach 328
nein
322
Einstellen PREHEM auf laufenden Sektor
nach 328
314
Stütz. Pot. im Arbeitsber. ?
nein
nach 328
ja
nach 316

FIG. 4f

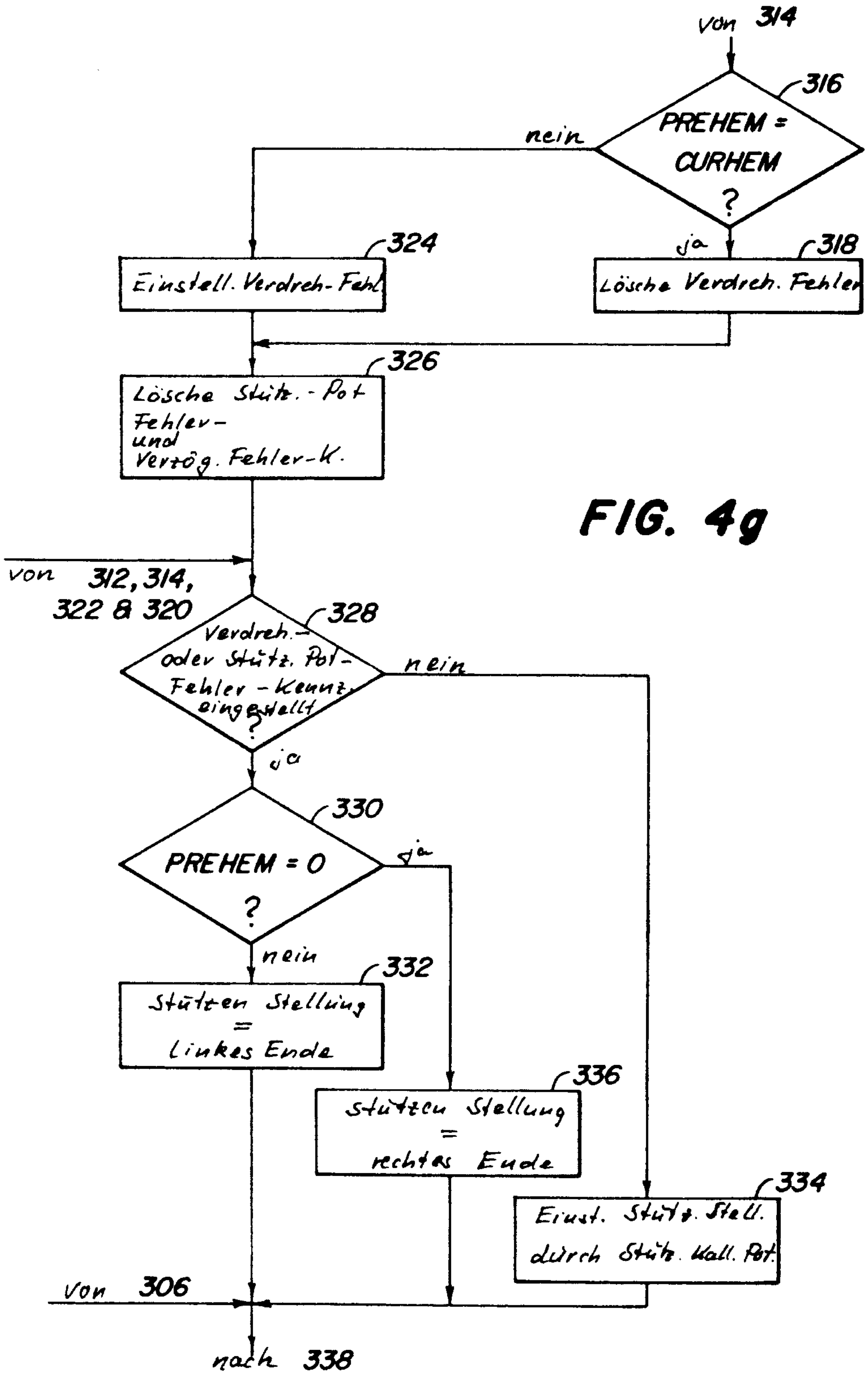
von 314
316
PREHEM = CURHEM ?
nein
ja
324
Einstell. Verdreh-Fehl
318
Lösche Verdreh. Fehler
326
Lösche Stütz.-Pot Fehler- und Verzög. Fehler-K.
von 312, 314, 322 & 320
328
Verdreh.- oder Stütz. Pot-Fehler-Kennz. eingestellt ?
nein
ja
330
PREHEM = 0 ?
ja
nein
332
Stützen Stellung = Linkes Ende
336
Stützen Stellung = rechtes Ende
334
Einst. Stütz. Stell. durch Stütz. Kall. Pot.
von 306
nach 338

FIG. 4g

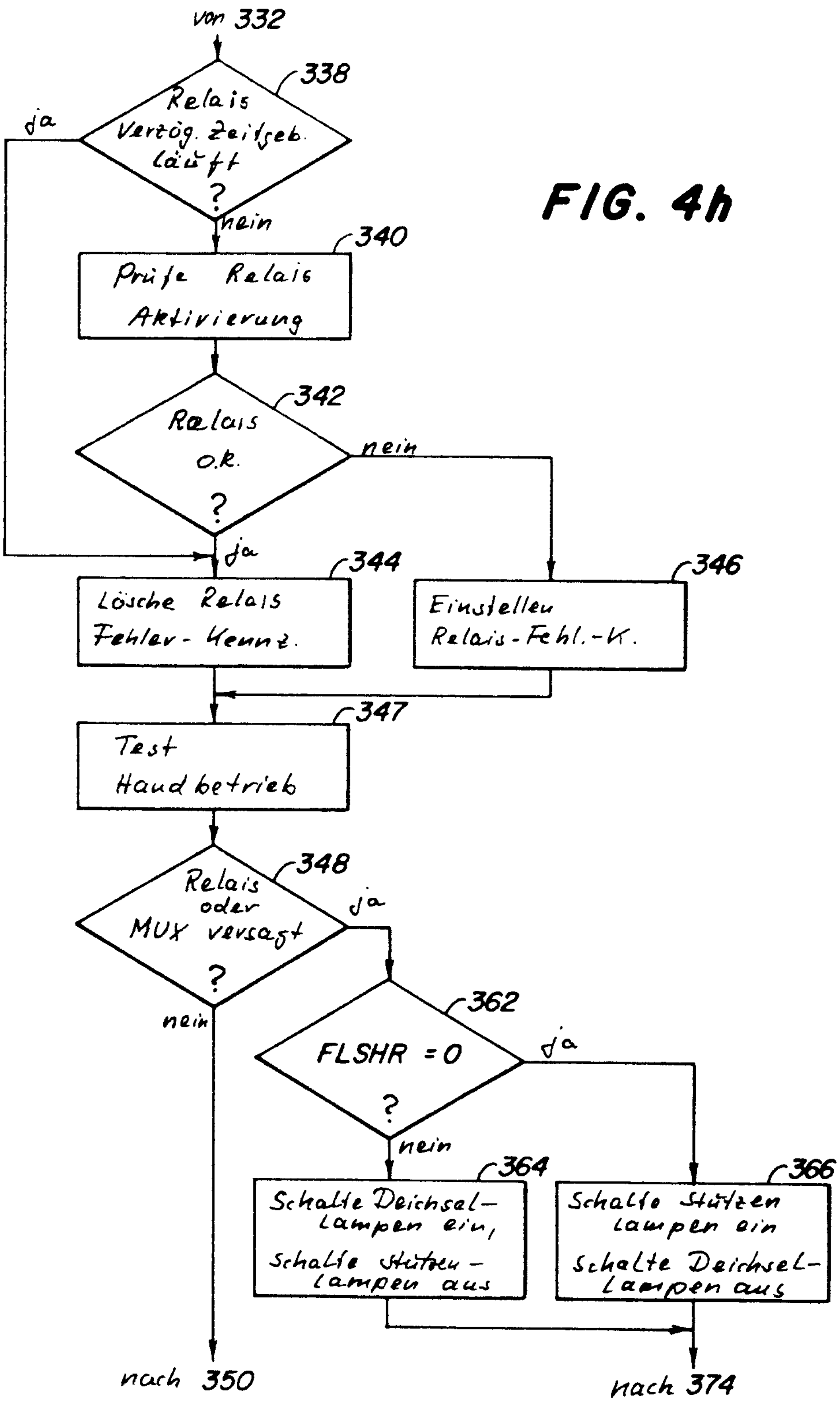
von 332
338
Relais Verzög. Zeitgeb. läuft ?
ja
nein
340
Prüfe Relais Aktivierung
342
Relais o.k. ?
nein
ja
344
Lösche Relais Fehler-Kennz.
346
Einstellen Relais-Fehl.-K.
347
Test Handbetrieb
348
Relais oder MUX versagt ?
ja
nein
362
FLSHR = 0 ?
ja
nein
364
Schalte Deichsel-Lampen ein, schalte Stützen-Lampen aus
366
Schalte Stützen Lampen ein Schalte Deichsel-Lampen aus
nach 350
nach 374

FIG. 4h

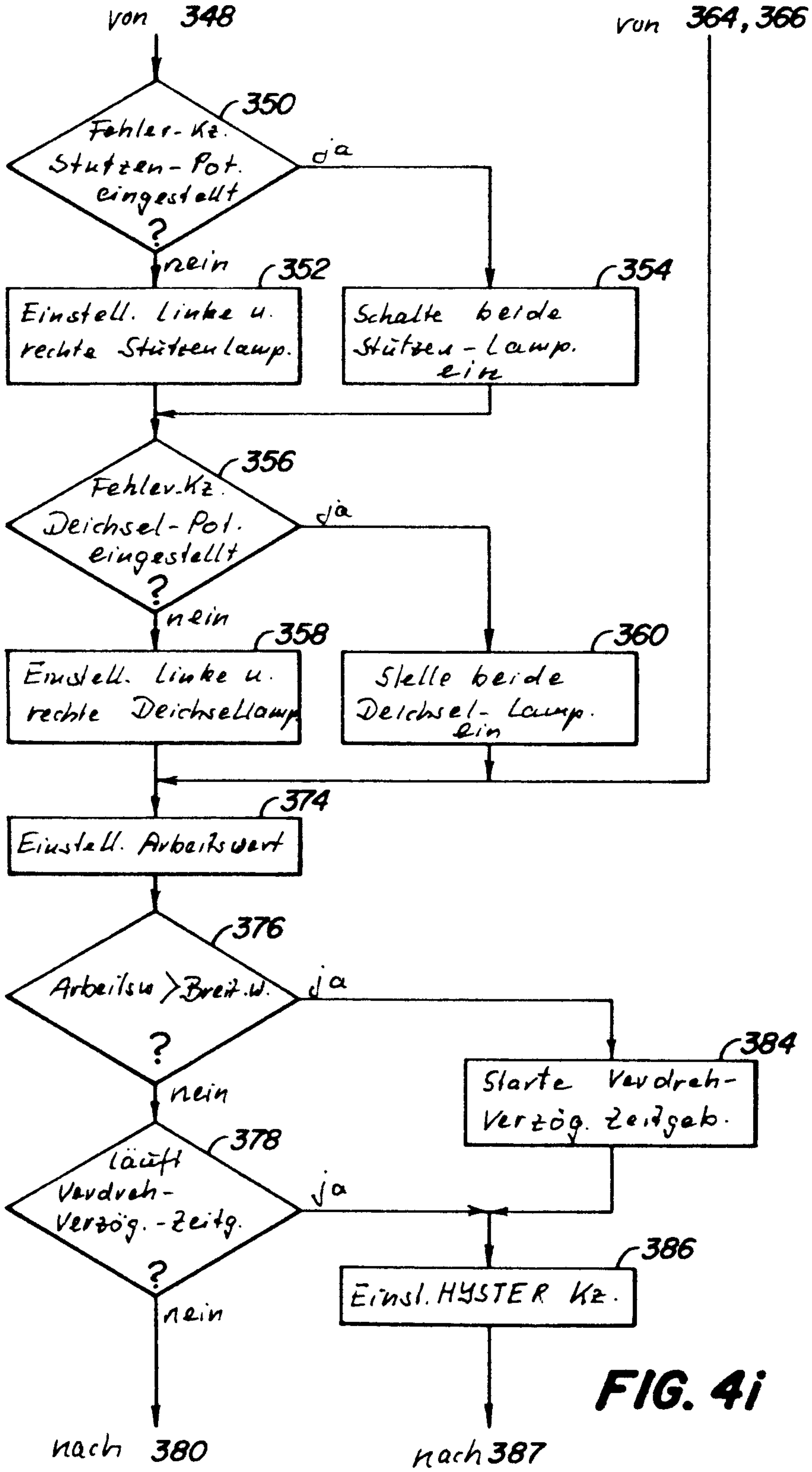
von 348
von 364, 366
350
Fehler-Kz. Stutzen-Pot. eingestellt ?
ja
nein
352
Einstell. Linke u. rechte Stützenlamp.
354
Schalte beide Stützen-Lamp. ein
356
Fehler-Kz. Deichsel-Pot. eingestellt ?
ja
nein
358
Einstell. Linke u. rechte Deichsellamp.
360
Stelle beide Deichsel-Lamp. ein
374
Einstell. Arbeitswert
376
Arbeitsw > Breit.W. ?
ja
nein
384
Starte Verdreh-Verzög. Zeitgeb.
378
läuft Verdreh-Verzög.-Zeitg. ?
ja
nein
386
Einst. HYSTER Kz.
nach 380
nach 387

FIG. 4i

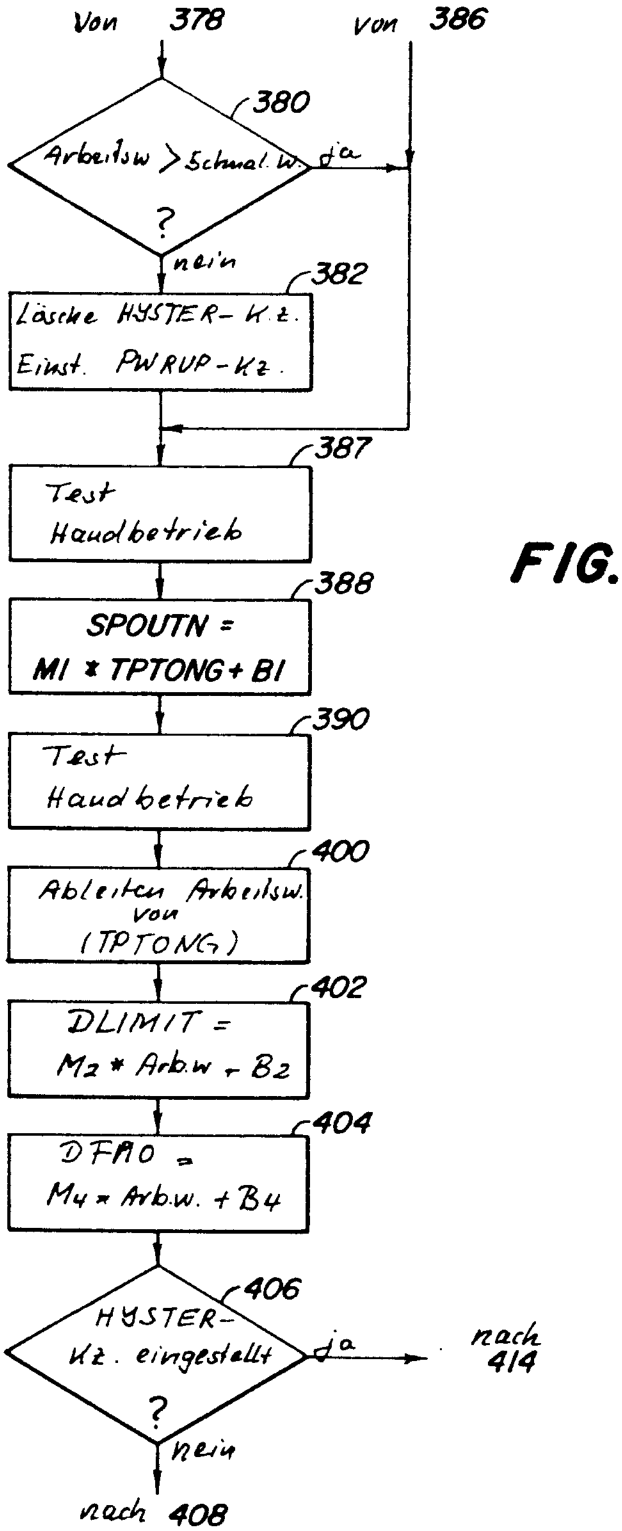
Von 378
Von 386
380
Arbeitsw > Schmal. W. ?
ja
nein
382
Lösche HYSTER-Kz.
Einst. PWRUP-Kz.
387
Test Handbetrieb
388
SPOUTN = M1 * TPTONG + B1
390
Test Handbetrieb
400
Ableiten Arbeitsw. von (TPTONG)
402
DLIMIT = M2 * Arb.w + B2
404
DFAO = M4 * Arb.w. + B4
406
HYSTER-Kz. eingestellt ?
ja
nach 414
nein
nach 408

FIG. 4j

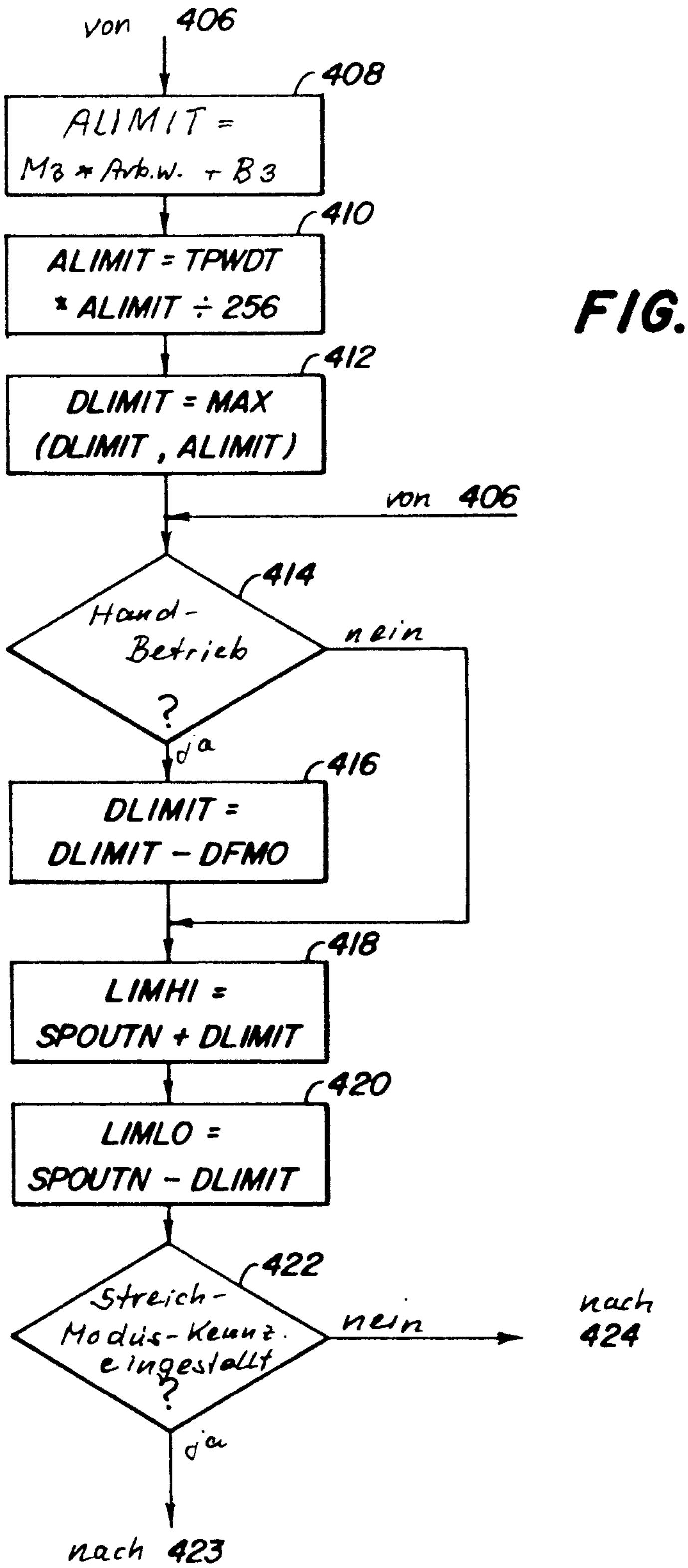

von 406
408
ALIMIT =
M3 * Arb.W. + B3
410
ALIMIT = TPWDT
* ALIMIT ÷ 256
412
DLIMIT = MAX
(DLIMIT , ALIMIT)
von 406
414
Hand-
Betrieb
?
nein
ja
416
DLIMIT =
DLIMIT – DFMO
418
LIMHI =
SPOUTN + DLIMIT
420
LIMLO =
SPOUTN – DLIMIT
422
Streich-
Modus-Kennz.
eingestellt
?
nein
nach
424
ja
nach 423


FIG. 4k

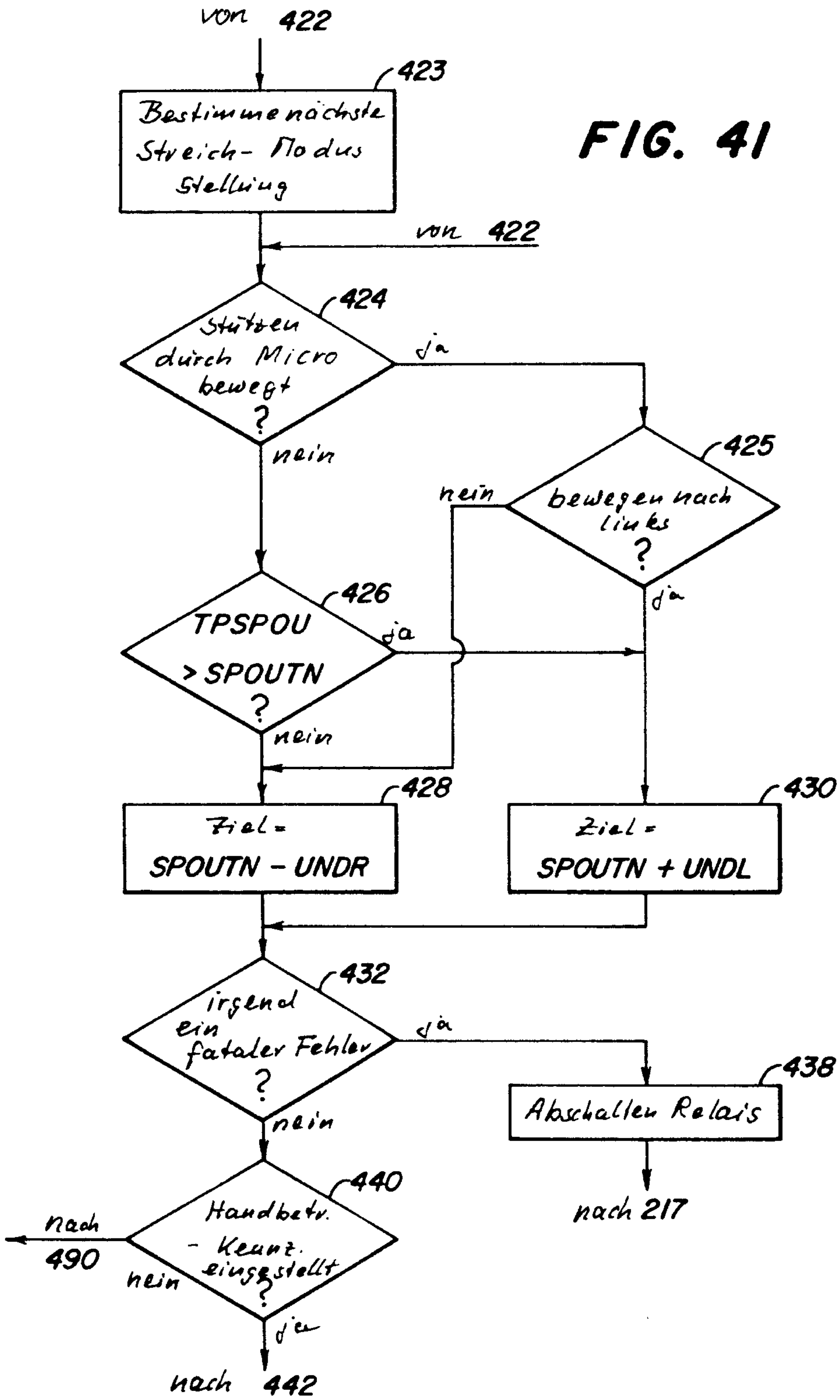
von 422
423
Bestimme nächste Streich-Modus Stellung
von 422
424
Stützen durch Micro bewegt ?
ja
nein
425
bewegen nach links ?
nein
ja
426
TPSPOU > SPOUTN ?
ja
nein
428
Ziel = SPOUTN – UNDR
430
Ziel = SPOUTN + UNDL
432
irgend ein fataler Fehler ?
ja
nein
438
Abschalten Relais
nach 217
440
Handbetr. - Kennz. eingestellt ?
nach 490
nein
ja
nach 442

FIG. 41

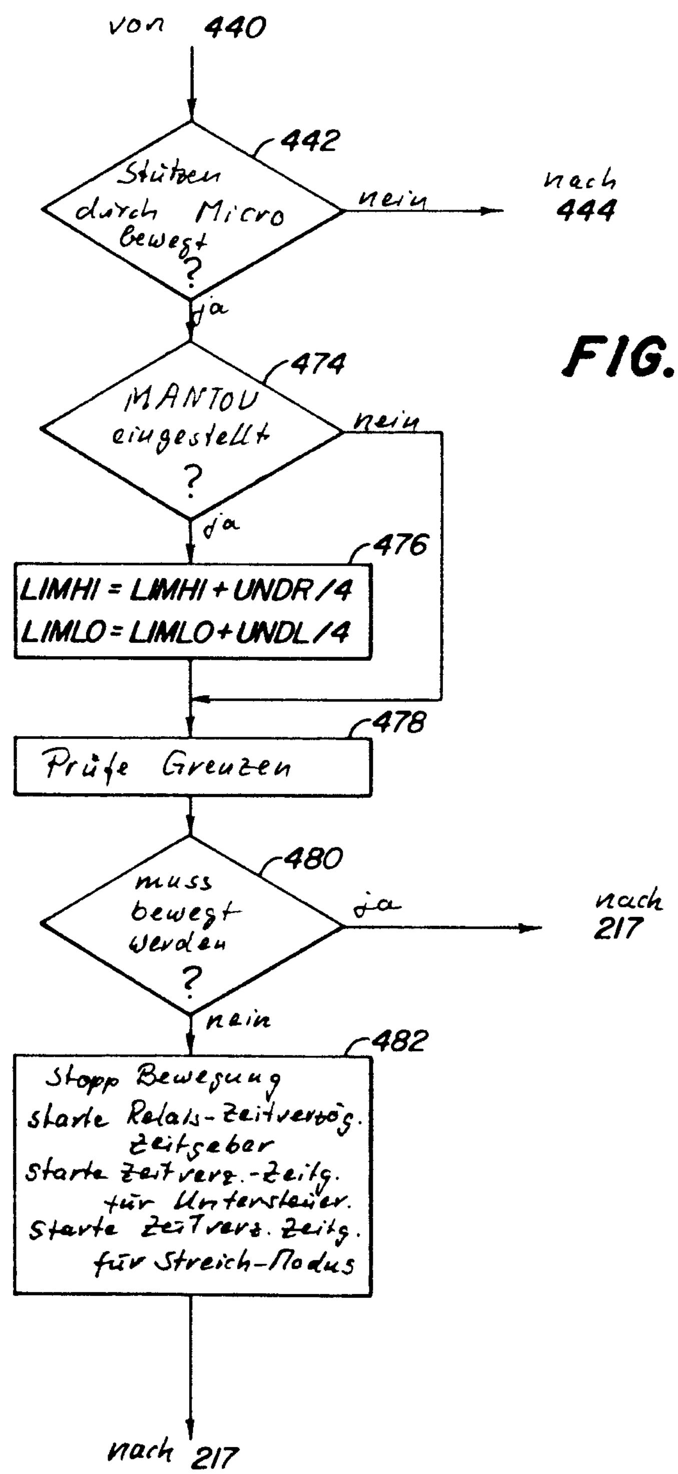
von 440
442
Stützen durch Micro bewegt ?
nein
nach 444
ja
474
MANTOU eingestellt ?
nein
ja
476
LIMHI = LIMHI + UNDR/4
LIMLO = LIMLO + UNDL/4
478
Prüfe Grenzen
480
muss bewegt werden ?
ja
nach 217
nein
482
Stopp Bewegung
starte Relais-Zeitverzög. Zeitgeber
starte Zeitverz.-Zeitg. für Untersteuer.
Starte Zeitverz. Zeitg. für Streich-Modus
nach 217

FIG. 4m

FIG. 4n

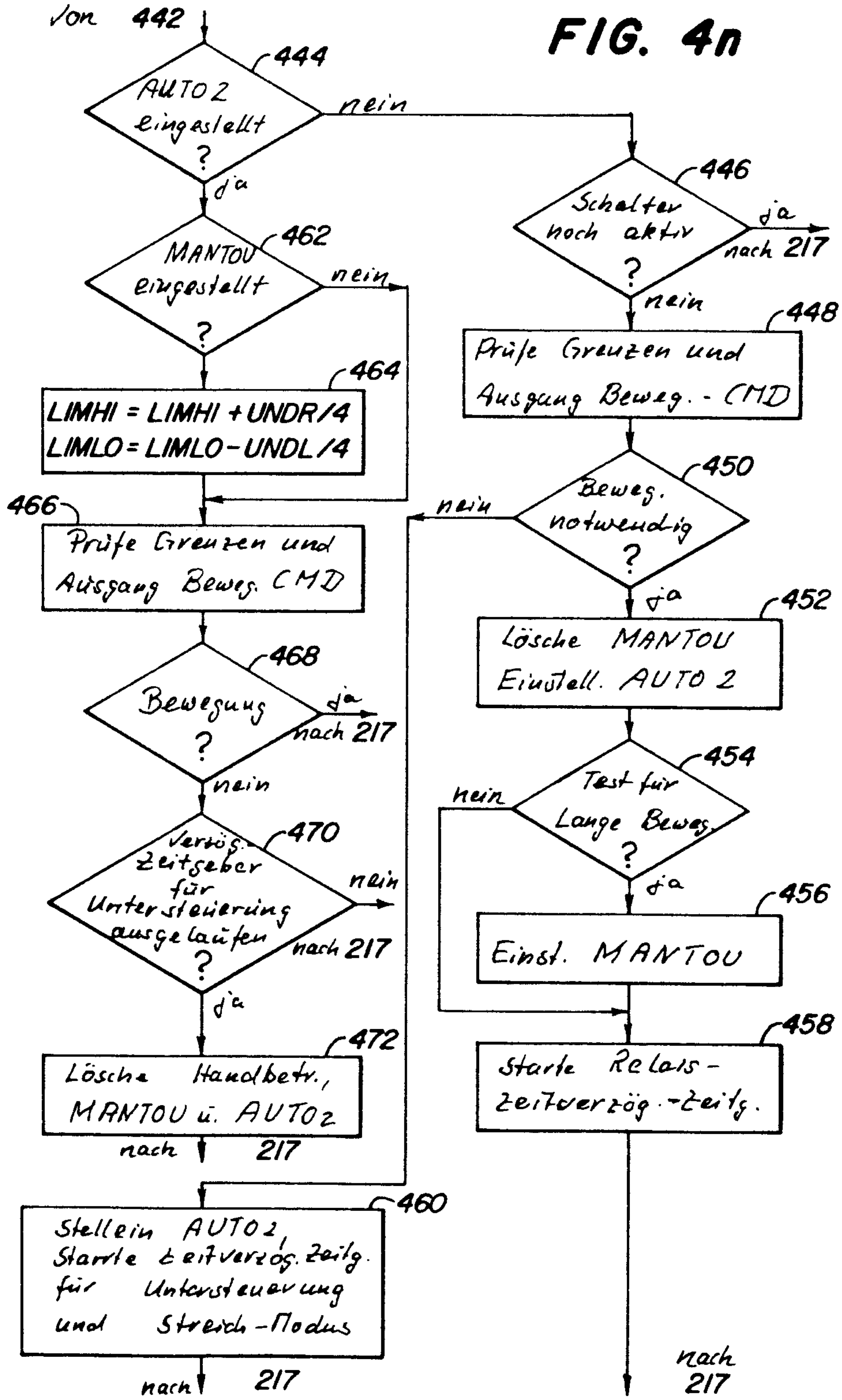
von 442
444
AUTO 2 eingestellt ?
nein
ja
446
Schalter noch aktiv ?
ja
nach 217
nein
448
Prüfe Grenzen und Ausgang Beweg. - CMD
462
MANTOU eingestellt ?
nein
464
LIMHI = LIMHI + UNDR/4
LIMLO = LIMLO - UNDL/4
466
Prüfe Grenzen und Ausgang Beweg. CMD
450
Beweg. notwendig ?
nein
ja
452
Lösche MANTOU Einstell. AUTO 2
468
Bewegung ?
ja
nach 217
nein
454
Test für Lange Beweg. ?
nein
ja
470
Verzög.-Zeitgeber für Untersteuerung ausgelaufen ?
nein
nach 217
ja
456
Einst. MANTOU
458
Starte Relais-Zeitverzög.-Zeitg.
472
Lösche Handbetr., MANTOU u. AUTO 2
nach 217
460
Stell ein AUTO 2, Starte Zeitverzög. Zeitg. für Untersteuerung und Streich-Modus
nach 217
nach 217

FIG. 4o

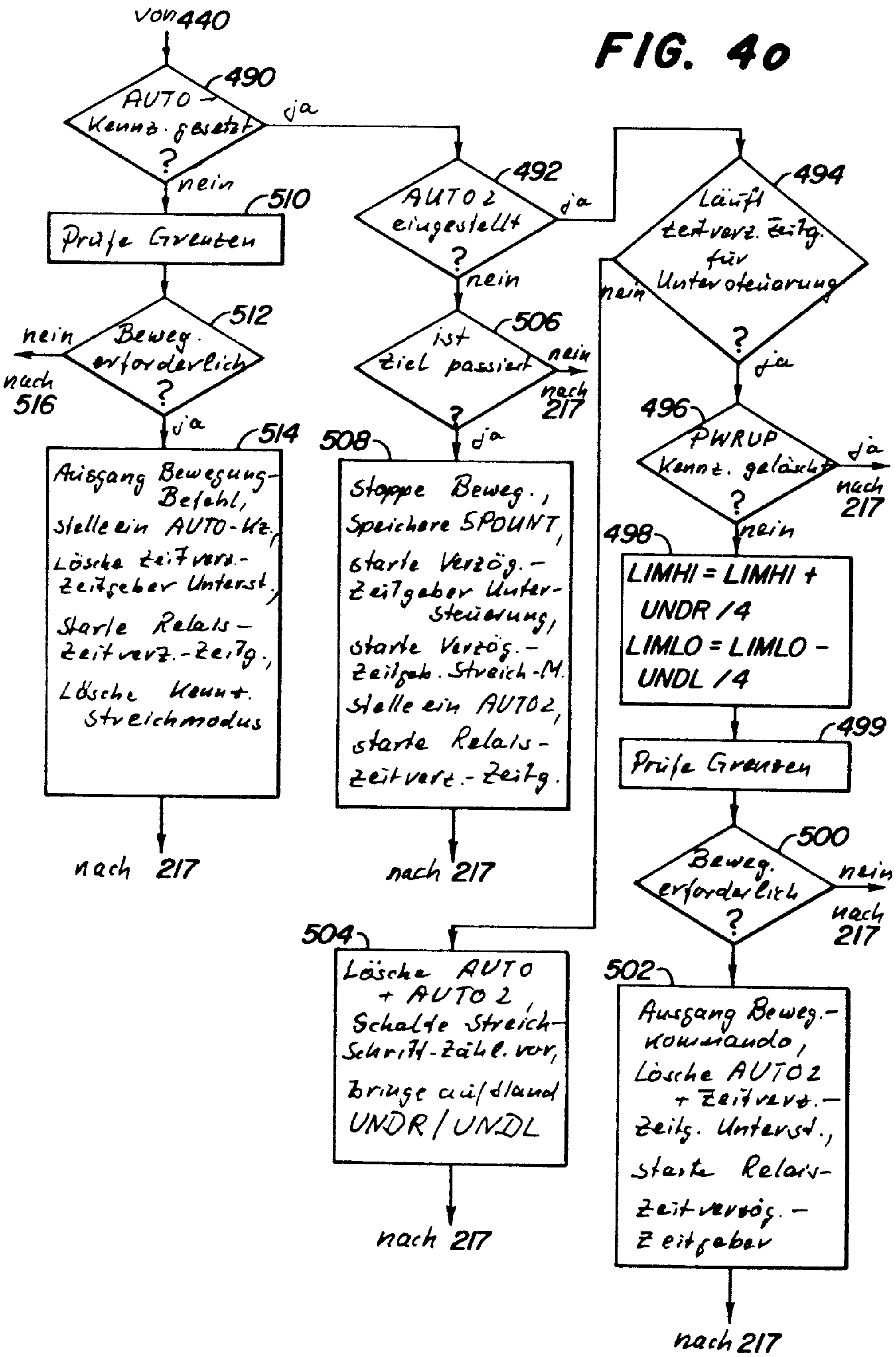
von 440
490
AUTO-Kenn.z. gesetzt ?
ja
nein
510
Prüfe Grenzen
512
Beweg. erforderlich ?
nein
nach 516
ja
514
Ausgang Bewegungs-Befehl, stelle ein AUTO-Kz., Lösche zeitverz.-Zeitgeber Unterst., Starte Relais-Zeitverz.-Zeitg., Lösche Kennz. Streichmodus
nach 217
492
AUTO 2 eingestellt ?
ja
nein
506
ist Ziel passiert ?
nein
nach 217
ja
508
Stoppe Beweg., Speichere SPOUNT, starte Verzög.-Zeitgeber Unter-Steuerung, starte Verzög.-Zeitgeb. Streich-M. Stelle ein AUTO2, starte Relais-zeitverz.-Zeitg.
nach 217
494
Läuft zeitverz. Zeitg. für Untersteuerung ?
nein
ja
496
PWRUP Kennz. gelöscht ?
ja
nach 217
nein
498
LIMHI = LIMHI + UNDR /4
LIMLO = LIMLO - UNDL /4
499
Prüfe Grenzen
500
Beweg. erforderlich ?
nein
nach 217
504
Lösche AUTO + AUTO 2, Schalte Streich-Schritt-Zähl. vor, bringe auf Stand UNDR / UNDL
nach 217
502
Ausgang Beweg.-Kommando, Lösche AUTO2 + Zeitverz.-Zeitg. Unterst., starte Relais-Zeitverzög.-Zeitgeber
nach 217

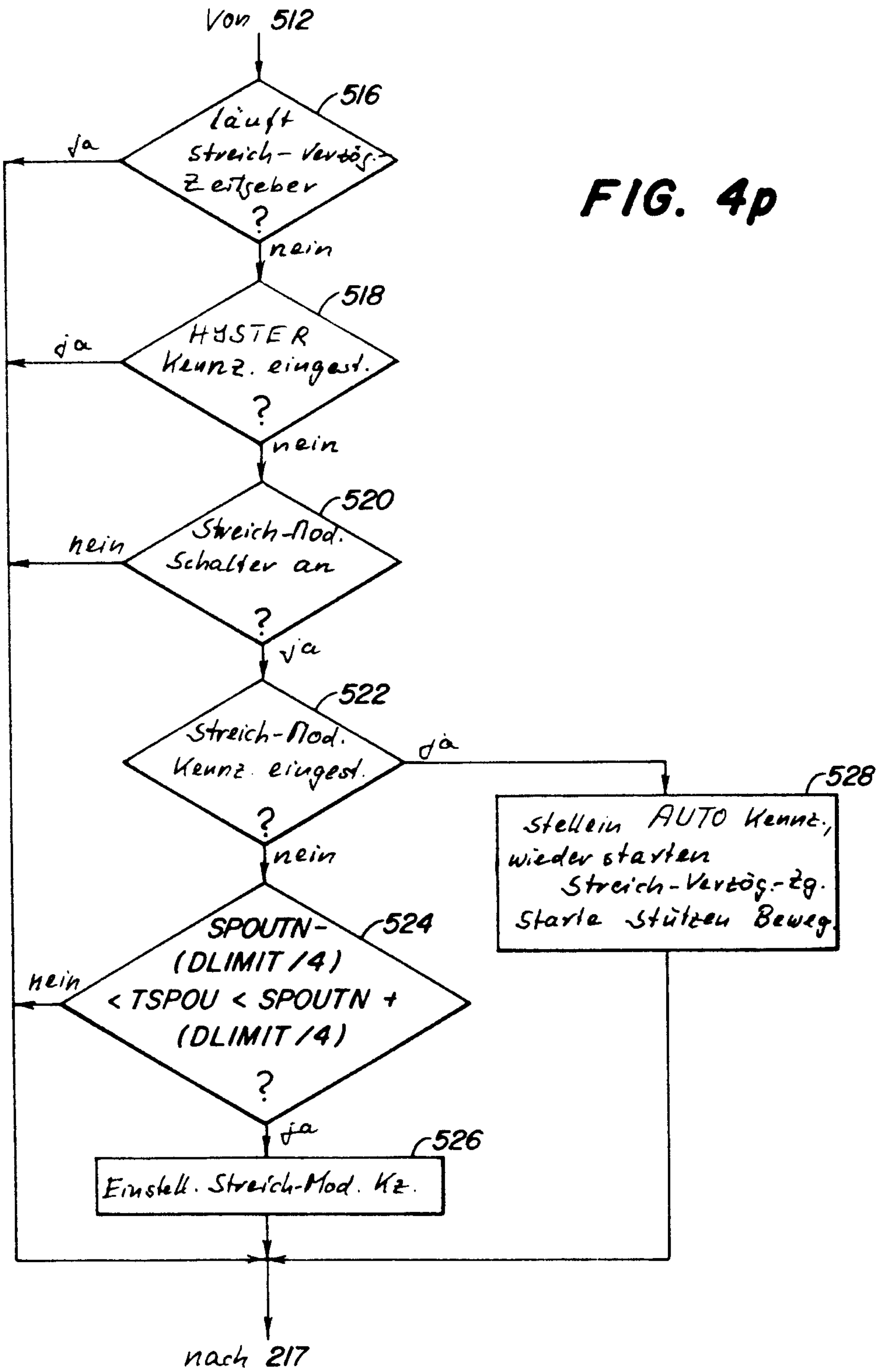

Von 512
516
läuft Streich-Verzög.-Zeitgeber ?
ja
nein
518
HYSTER Kennz. eingest. ?
ja
nein
520
Streich-Mod. Schalter an ?
nein
ja
522
Streich-Mod. Kennz. eingest. ?
ja
nein
528
stellein AUTO Kennz., wieder starten Streich-Verzög.-Zg. Starte Stützen Beweg.
524
SPOUTN - (DLIMIT /4) < TSPOU < SPOUTN + (DLIMIT /4) ?
nein
ja
526
Einstell. Streich-Mod. Kz.
nach 217


FIG. 4p

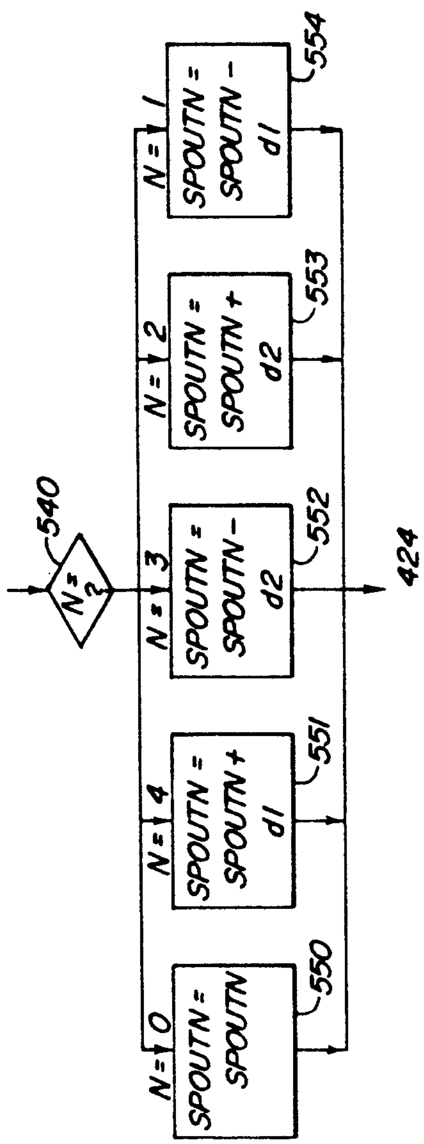
N=?
540
N=0
SPOUTN = SPOUTN
550
N=4
SPOUTN = SPOUTN + d1
551
N=3
SPOUTN = SPOUTN - d2
552
N=2
SPOUTN = SPOUTN + d2
553
N=1
SPOUTN = SPOUTN - d1
554
424

FIG. 5

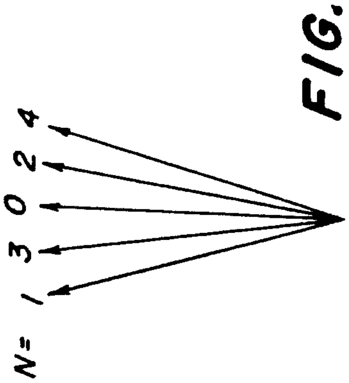
N= 1 3 0 2 4

FIG. 6

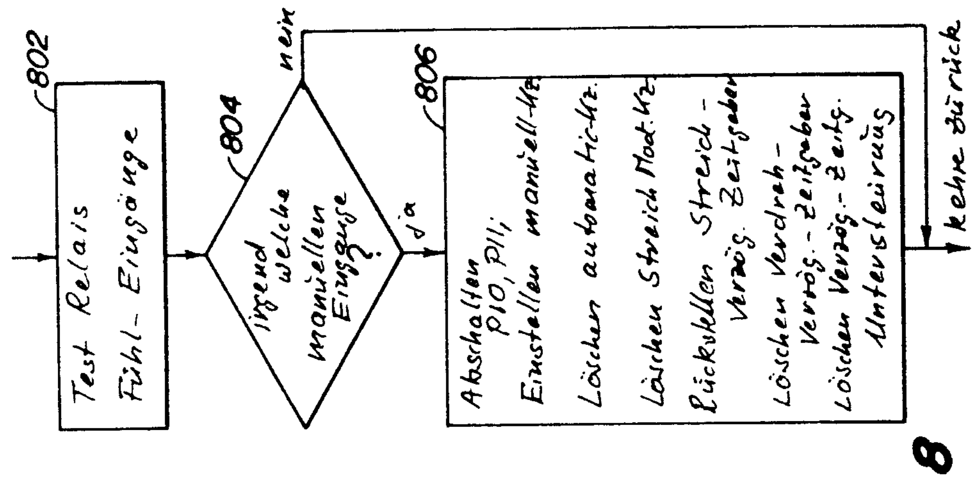
802
Test Relais
Fühl-Eingänge
804
irgend welche manuellen Eingänge ?
nein
ja
806
Abschalten P10, P11;
Einstellen manuell-Kz
Löschen automatic-Kz
Löschen Streich Mod. Kz
Rückstellen Streich-Verzög. Zeitgeber
Löschen Verdreh-Verzög.-Zeitgeber
Löschen Verzög.-Zeitg. Unterst eingang
kehre zurück

FIG. 8

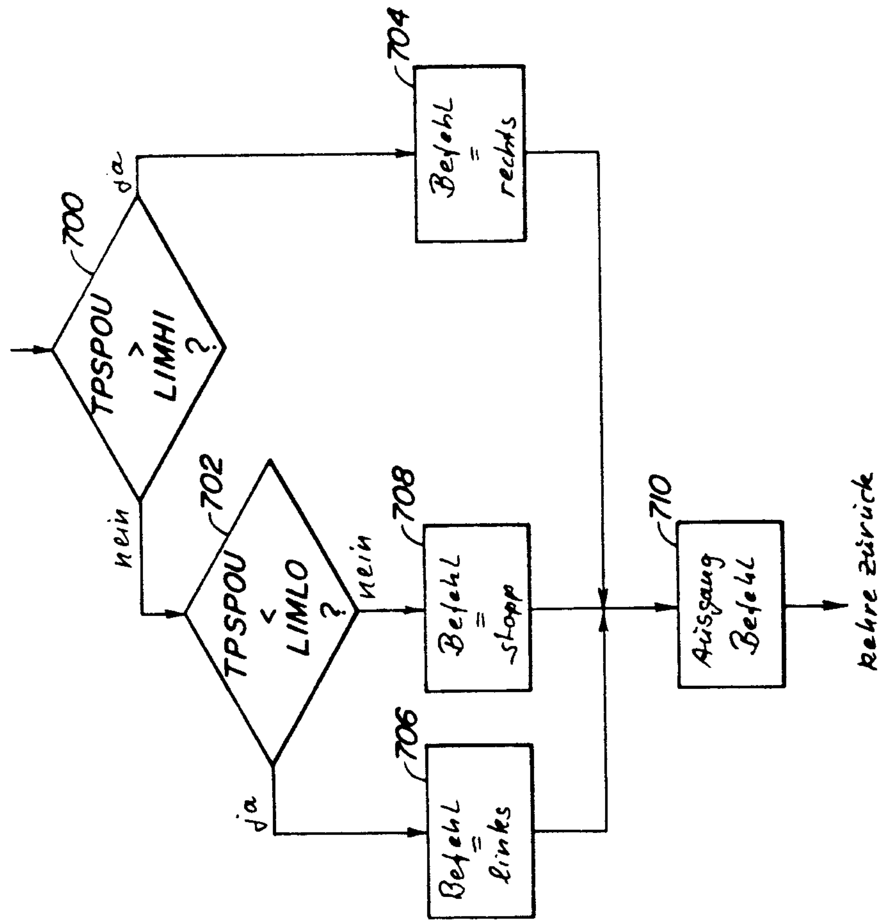
700
TPSPOU > LIMHI ?
ja
nein
702
TPSPOU < LIMLO ?
ja
nein
704
Befehl = rechts
706
Befehl = links
708
Befehl = stopp
710
Ausgang Befehl
kehre zurück

FIG. 7